# EUROPÄISCHE PATENTSCHRIFT

(11) **EP 2 925 802 B1**
(45) Veröffentlichungstag und Bekanntmachung des Hinweises auf die Patenterteilung: **14.12.2016**
(21) Anmeldenummer: 13779238.8
(22) Anmeldetag: 18.10.2013
(51) Int. Cl.: C08G 18/62, C08G 18/72, C08G 18/80, C09D 175/04, C08G 18/28

(54) **BESCHICHTUNGSMITTELZUSAMMENSETZUNGEN UND DARAUS HERGESTELLTE BESCHICHTUNGEN MIT HOHER KRATZFESTIGKEIT BEI GLEICHZEITIG GUTER POLIERBARKEIT UND GUTEN OPTISCHEN EIGENSCHAFTEN SOWIE DEREN VERWENDUNG**
COATING MATERIAL COMPOSITIONS AND COATINGS PRODUCED THEREFROM WITH HIGH SCRATCH RESISTANCE AND GOOD POLISHABILITY AND GOOD OPTICAL PROPERTIES, AND USE THEREOF
COMPOSITIONS D'AGENTS DE REVÊTEMENT ET REVÊTEMENTS PRODUITS À PARTIR DESDITES COMPOSITIONS ET PRÉSENTANT À LA FOIS UNE RÉSISTANCE ÉLEVÉE AUX RAYURES, UNE BONNE APTITUDE AU POLISSAGE ET DES BONNES CARACTÉRISTIQUES ESTHÉTIQUES, ET UTILISATION DESDITES COMPOSITIONS

(30) Priorität: 03.12.2012 US 201261732423 P; 03.12.2012 EP 12195235
(43) Veröffentlichungstag der Anmeldung: 07.10.2015
(73) Patentinhaber: BASF Coatings GmbH, 48165 Münster (DE)
(72) Erfinder: GROENEWOLT, Matthijs, 48147 Münster (DE); AUSTRUP, Berthold, 59394 Nordkirchen (DE); HÜBNER, Katharina, 48317 Drensteinfurt (DE); MÜLLER, Jörg, 59075 Hamm (DE); HANNING, Silke, 48249 Dülmen (DE); FRANK, Andrea, 48727 Billerbeck (DE)
(74) Vertreter: BASF IP Association
(86) Internationale Anmeldenummer: PCT/EP2013/071883
(87) Internationale Veröffentlichungsnummer: WO 2014/086530

(56) Entgegenhaltungen:
- EP-A1- 1 193 278
- EP-A2- 1 273 640
- DE-A1-102009 024 103
- US-A1- 2011 245 406

## Beschreibung

Die vorliegende Erfindung betrifft nichtwässrige Beschichtungsmittelzusammensetzungen enthaltend mindestens eine Polyhydroxylgruppenhaltige Verbindung (A), mindestens ein Polyisocyanat (B) mit freien oder blockierten Isocyanatgruppen und mit Silangruppen und/oder dessen Dimer und/oder Oligomer, mindestens einen Katalysator (D) für die Vernetzung der Silangruppen und mindestens ein Rheologiehilfsmittel (R) auf Basis pyrogener Kieselsäure.

Derartige Beschichtungsmittel sind beispielsweise aus der WO 10/063332 bekannt. Die in diesen Beschichtungsmitteln eingesetzte, Polyhydroxylgruppen enthaltende Verbindung (A) basiert auf einem hyperverzweigten, dendritischen hydroxyfunktionellen Polyester, bei dem mindestens eine Hydroxylgruppe mit einer C8- bis C9-Monocarbonsäure verestert ist. Die resultierenden Beschichtungen weisen eine hohe Kratzbeständigkeit und Witterungsbeständigkeit sowie gleichzeitig einen guten optischen Gesamteindruck (sogenanntes sehr gutes Appearance) auf, wobei allerdings noch geringere sogenannte Short-Wave-Werte bei erhöhten Schichtdicken von mindestens 40 µm wünschenswert sind. Verbesserungsbedürftig bei diesen Beschichtungsmitteln ist außerdem die Schleifbarkeit und Polierbarkeit der resultierenden Beschichtungen.

Aus der WO 08/74491, WO 08/74490, der WO 08/74489, der WO09/077181 und der WO 10/149236 sind Beschichtungsmittel bekannt, bei denen die eingesetzte, Isocyanatgruppen und Silangruppen enthaltende Verbindung (B) basiert auf bekannten Isocyanaten, bevorzugt auf den Biuret-Dimeren und Isocyanurat-Trimeren von Diisocyanaten, insbesondere von Hexamethylendiisocyanat. Diese Beschichtungsmittelzusammensetzungen weisen gegenüber herkömmlichen Polyurethan-Beschichtungsmitteln den Vorteil einer deutlich verbesserten Kratzfestigkeit bei gleichzeitig guter Witterungsbeständigkeit auf. Verbesserungsbedürftig bei diesen Beschichtungsmitteln ist neben der Schleifbarkeit und Polierbarkeit der resultierenden Beschichtungen auch der optische Eindruck. Insbesondere soll der optische Gesamteindruck (sogenanntes sehr gutes Appearance) und die Läuferneigung an senkrechten Flächen verbessert werden.

Ferner sind in der EP-A-1 273 640 2K-Beschichtungsmittel beschrieben, enthaltend eine Polyol-Komponente und eine Vernetzerkomponente, bestehend aus aliphatischen und/oder cycloaliphatischen Polyisocyanaten oder den davon durch Polymerisierung, Allophanat-, Biuret- oder Urethanbildung abgeleiteten Polyisocyanaten, wobei 0,1 bis 95 mol-% der ursprünglich freien vorhandenen Isocyanatgruppen mit Bisalkoxysilylamin umgesetzt sind. Diese Beschichtungsmittel können zur Herstellung von Klar- oder Decklackierungen im Kraftfahrzeugbereich eingesetzt werden und weisen nach ihrer vollständigen Härtung eine gute Kratzbeständigkeit bei gleichzeitig guter Beständigkeit gegen Umwelteinflüsse auf. Jedoch sind in dieser Schrift keine Angaben enthalten, wie die Schleifbarkeit und Polierbarkeit sowie der optische Eindruck der resultierenden Beschichtungen verbessert werden können.

Aus der WO07/033786 sind außerdem Beschichtungsmittel bekannt, die neben Phosphonsäurediestern und Diphosphonsäurediestern als Katalysator (A) silangruppenhaltige Gemische (B), wie beispielsweise die Mischung aus dem isocyanatgruppenfreien Umsetzungsprodukt (B1) von Hexamethylendiisocyanat-Isocyanurat mit N,N-Bis(3-trimethoxysilylpropan-1-yl)amin und dem isocyanatgruppenfreien Umsetzungsprodukt (B2) von Isophorondiisocyanat-Isocyanurat mit N-(3-Trimethoxysilylpropan-1-yl)-N-n-butylamin, sowie ggf. als weitere Zusatzstoffe (C) Polyacrylatharze oder andere Bindemittel und Vernetzungsmittel enthalten. Die aus diesen Beschichtungsmitteln hergestellten Beschichtungen weisen nach ihrer Härtung wiederum eine gute Kratzbeständigkeit bei gleichzeitig guter Beständigkeit gegen Chemikalien und Umwelteinflüsse auf, jedoch ist die Witterungsbeständigkeit verbesserungsbedürftig und die resultierenden Beschichtungen sind recht spröde. Außerdem fehlen auch hier wiederum Angaben, wie die Schleifbarkeit und Polierbarkeit sowie der optische Eindruck der resultierenden Beschichtungen verbessert werden kann.

In der WO 2001/98393 werden 2 K-Beschichtungsmittel beschrieben, enthaltend ein Polyol als Bindemittelkomponente sowie als Vernetzerkomponente eine Mischung aus einem Polyisocyanat (A) und einem Silan-Oligomer (B), welches mindestens zwei Isocyanatgruppen und zusätzlich Alkoxysilangruppen, bevorzugt Bisalkoxysilangruppen, enthält und welches hergestellt wird durch Umsetzung eines Polyisocyanates (PI) mit Alkoxysilylaminen, bevorzugt mit Bisalkoxysilylaminen, insbesondere mit Bis(3-propyltrimethoxysilyl)amin. Als Polyisocyanat (A) sowie als Polyisocyanat (PI) zur Herstellung der Komponente (B) werden bevorzugt Hexamethylendiisocyanat und Isophorondiisocyanat sowie deren Biurete und Isocyanurate eingesetzt. Diese Beschichtungsmittel werden insbesondere als Primer eingesetzt und sind daher auf die Haftung auf metallischen Untergründen, bevorzugt auf Aluminium-Untergründen, optimiert. Angaben, wie die für Klarlacke äußerst wichtigen Eigenschaften, insbesondere die Kratzfestigkeit einerseits und gleichzeitig auch die Schleif- und Polierbarkeit sowie der optische Eindruck der resultierenden Beschichtungen andererseits, verbessert werden können, sind in dieser Schrift nicht enthalten.

Die EP-B-1 527 144 beschreibt 2-Komponenten Klarlacke auf der Basis von hydroxylgruppenhaltigen Polyacrylatharzen, isocyanuratgruppenhaltigem Hexamethylendiisocyanat als Vernetzungsmittel und einer Mischung aus hydrophilen und hydrophoben Nanopartikeln auf der Basis von Siliciumdioxid. Diese Beschichtungsmittel führen zu hochglänzenden, von Oberflächenstörungen freien, kratzfesten Beschichtungen. Weiter verbesserungsbedürftig sind jedoch neben der Kratzfestigkeit und Witterungsbeständigkeit insbesondere die optischen Eigenschaften und hier vor allem die Verlaufswerte.

In der noch nicht veröffentlichten internationalen Patentanmeldung PCT/EP 2012/059611 und in der noch nicht offengelegten internationalen Patentanmeldung PCT/EP2012/058355 sind schließlich Beschichtungsmittel der eingangs genannten Art beschrieben, die zu Beschichtungen mit einer verbesserten Polierbarkeit führen. Dies wird insbesondere dadurch erreicht, dass als Isocyanatgruppen und Silangruppen enthaltende Verbindung (B) eine Mischung einer Verbindung (B1) mit einem cycloaliphatischen Polyisocyanatgrundkörper und einer Verbindung (B2) mit einem acyclischen aliphatischen Polyisocyanatgrundkörper eingesetzt wird. Der Zusatz von Rheologiehilfsmitteln auf Basis pyrogener Kieselsäure zu den Beschichtungsmitteln ist in diesen Anmeldungen nicht beschrieben.

### Aufgabe

Aufgabe der vorliegenden Erfindung war es daher, Beschichtungsmittelzusammensetzungen, insbesondere für die Automobilserienlackierung und die Automobilreparaturlackierung, zur Verfügung zu stellen, die zu Beschichtungen führen, die hochgradig kratzfest sind und insbesondere einen hohen Glanzerhalt nach Kratzbelastung aufweisen. Gleichzeitig sollten die resultierenden Beschichtungen aber auch eine gute Schleifbarkeit und gute Polierbarkeit gewährleisten. Vor allem sollen die resultierenden Beschichtungen einen sehr guten optischen Gesamteindruck aufweisen.

Zur Beurteilung des optischen Gesamteindrucks wurde die Messung des Oberflächenprofils der applizierten, eingebrannten Lackfilme mittels der Wavescan - Methode eingesetzt, die es gestattet, das sichtbare Profil von Lackfilmoberflächen zu vermessen. Hierzu wurde die Intensität der Reflektion ("Welligkeit") mittels des Gerätes "Wave Scan" der Firma Byk - Gardner gemessen, wobei auf einer Strecke von 10 cm 1250 Messpunkte aufgenommen wurden. Die Reflektion wird vom Messgerät in Langwelligkeit ("Long-Wave"), d. h. die Varianz der Lichtintensität für Strukturen im Bereich von 0,6 mm bis 10 mm sowie in Kurzwelligkeit ("Short-Wave"), d. h. die Varianz der Lichtintensität für Strukturen im Bereich von 0,1 mm bis 0,6 mm, unterteilt. Für einen guten visuellen Eindruck (Appearance) sind - neben niedrigen Long-Wave Messwerten der resultierenden Beschichtungen bei möglichst niedrigen Schichtdicken - vor allem niedrige Short-Wave Messwerte bei einer Schichtdicke von ca. 40 µm entscheidend. Entscheidend ist, dass der Longe-Wave Wert wichtiger ist, wenn das Blech aus der Entfernung betrachtet wird, während der Short-Wave Wert sehr wichtig wird, wenn das Blech aus der Nähe betrachtet wird.

Ferner sollten Beschichtungsmittelzusammensetzungen zur Verfügung gestellt werden, die zu einem hochgradig witterungsstabilen Netzwerk führen und die gleichzeitig eine hohe Säurefestigkeit gewährleisten. Weiterhin sollten sich die Beschichtungen und Lackierungen, speziell die Klarlackierungen, auch in Schichtdicken > 40 µm herstellen lassen, ohne dass Spannungsrisse auftreten. Darüber hinaus sollten die Beschichtungsmittel die üblicherweise an die Klarlackschicht bei Automobilserienlackierungen und Autoreparaturlackierungen gestellten Anforderungen erfüllen.

Schließlich sollten die neuen Beschichtungsmittel einfach und sehr gut reproduzierbar herstellbar sein und während der Lackapplikation keine ökologischen Probleme bereiten.

### Lösung der Aufgabe

Im Lichte der obengenannten Aufgabenstellung wurden nichtwässrige Beschichtungsmittelzusammensetzungen gefunden, enthaltend
(A) mindestens eine Polyhydroxylgruppenhaltige Verbindung (A),
(B1) mindestens eine Polyisocyanatgruppenhaltige Verbindung (B1) mit freien oder blockierten Isocyanatgruppen und mit einem cycloaliphatischen Polyisocyanatgrundkörper und/oder einem durch Trimerisierung, Dimerisierung, Urethan-, Biuret-, Uretdion- und/oder Allophanatbildung von einem solchen cycloaliphatischen Polyisocyanat abgeleiteten Polyisocyanatgrundkörper,
(B2) mindestens eine, von der Komponente (B1) verschiedene, Polyisocyanatgruppenhaltige Verbindung (B2) mit freien oder blockierten Isocyanatgruppen und mit einem acyclischen, aliphatischen Polyisocyanatgrundkörper und/oder einem durch Trimerisierung, Dimerisierung, Urethan-, Biuret-, Uretdion- und/oder Allophanatbildung von einem solchen acyclischen aliphatischen Polyisocyanat abgeleiteten Polyisocyanatgrundkörper,
(D) mindestens einen Katalysator (D) für die Vernetzung von Silangruppen
und
(R) mindestens ein Rheologiehilfsmittel (R) auf Basis pyrogener Kieselsäure,
wobei die Komponente (B1) und/oder die Komponente (B2) mindestens eine Struktureinheit der Formel (I)

-NR-(X-SiR"x(OR')3-x) (I),

und/oder mindestens eine Struktureinheit der Formel (II)

-N(X-SiR"x(OR')3-x)n(X'-SiR"y(OR')3-y)m (II),

mit
R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl,
X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen, n = 0 bis 2, m = 0 bis 2, m+n = 2 sowie x, y = 0 bis 2 ist, enthält, mit der Maßgabe, dass
   (i) die Komponente (B1) in einer solchen Menge eingesetzt wird, dass der Bindemittelanteil des isocyanatgruppenhaltigen Grundkörpers der Komponente (B1) zwischen 5 und 45 Gew.% beträgt, jeweils bezogen auf die Summe aus dem Bindemittelanteil des isocyanatgruppenhaltigen Grundkörpers der Komponente (B1) plus dem Bindemittelanteil des isocyanatgruppenhaltigen Grundkörpers der Komponente (B2)
   und
   (ii) die Mischung der Komponenten (B1) plus (B2) sowohl Struktureinheiten (I) als auch Struktureinheiten (II) aufweist.

Gegenstand der vorliegenden Erfindung sind außerdem mehrstufige Beschichtungsverfahren unter Verwendung dieser Beschichtungsmittelzusammensetzungen sowie die Verwendung der Beschichtungsmittelzusammensetzungen als Klarlack bzw. Anwendung des Beschichtungsverfahrens für die Automobilserienlackierung, die Automobilreparaturlackierung und/oder für die Beschichtung von Automobil-Anbauteilen, von Kunststoffsubstraten und/oder von Nutzfahrzeugen.

Es ist überraschend und war nicht vorhersehbar, dass die Beschichtungsmittelzusammensetzungen zu Beschichtungen führen, die hochgradig kratzfest sind und insbesondere einen hohen Glanzerhalt nach Kratzbelastung aufweisen, dabei gleichzeitig aber auch eine gute Schleifbarkeit und gute Polierbarkeit der resultierenden Beschichtungen gewährleisten.

Vor allem weisen die resultierenden Beschichtungen einen sehr guten optischen Gesamteindruck auf. Zur Beurteilung des optischen Gesamteindrucks wurde die Messung des Oberflächenprofils der applizierten, eingebrannten Lackfilme mittels der Wavescan - Methode eingesetzt, die es gestattet, das sichtbare Profil von Lackfilmoberflächen zu vermessen. Hierzu wurde die Intensität der Reflektion ("Welligkeit") mittels des Gerätes "Wave Scan" der Firma Byk - Gardner gemessen, wobei auf einer Strecke von 10 cm 1250 Messpunkte aufgenommen wurden. Die Reflektion wird vom Messgerät in Langwelligkeit ("Long-Wave"), d. h. die Varianz der Lichtintensität für Strukturen im Bereich von 0,6 mm bis 10 mm sowie in Kurzwelligkeit ("Short-Wave"), d. h. die Varianz der Lichtintensität für Strukturen im Bereich von 0,1 mm bis 0,6 mm, unterteilt. Für einen guten visuellen Eindruck sind - neben niedrigen Long-Wave Messwerten der resultierenden Beschichtungen bei möglichst niedrigen Schichtdicken - vor allem niedrige Short-Wave Messwerte bei einer Schichtdicke von ca. 40 µm entscheidend.

Ferner führen die Beschichtungsmittelzusammensetzungen zu einem hochgradig witterungsstabilen Netzwerk und gewährleisten gleichzeitig eine hohe Säurefestigkeit der Beschichtungen. Weiterhin lassen sich die Beschichtungen und Lackierungen, speziell die Klarlackierungen, auch in Schichtdicken > 40 µm herstellen, ohne dass Spannungsrisse auftreten. Darüber hinaus erfüllen die Beschichtungsmittel die üblicherweise an die Klarlackschicht bei Automobilserienlackierungen und Autoreparaturlackierungen gestellten Anforderungen.

Schließlich sind die neuen Beschichtungsmittel einfach und sehr gut reproduzierbar herstellbar und bereiten während der Lackapplikation keine ökologischen Probleme.

### Beschreibung der Erfindung

### Die erfindungsgemäßen Beschichtungsmittel

Insbesondere handelt es sich bei den erfindungsgemäßen Beschichtungsmitteln um thermisch härtbare Beschichtungsmittel, also bevorzugt um Beschichtungsmittel, die im wesentlichen frei sind von strahlenhärtbaren ungesättigten Verbindungen, insbesondere völlig frei sind von strahlenhärtbaren ungesättigten Verbindungen.

### Die Polyhydroxylgruppen-haltige Verbindung (A)

Als Polyhydroxylgruppen-haltige Verbindung (A) können alle dem Fachmann bekannten Verbindungen eingesetzt werden, welche mindestens 2 Hydroxylgruppen pro Molekül aufweisen und oligomer und/oder polymer sind. Es können als Komponente (A) auch Mischungen verschiedener oligomerer und/oder polymerer Polyole eingesetzt werden.

Die bevorzugten oligo- und/oder polymeren Polyole (A) weisen massenmittlere Molekulargewichte Mw > 500 Dalton, gemessen mittels Gelpermeationschromatographie (GPC) gegen einen Polystyrolstandard, bevorzugt zwischen 800 und 100.000 Dalton, insbesondere zwischen 1.000 und 50.000 Dalton auf.

Besonders bevorzugt sind Polyesterpolyole, Polyurethanpolyole, Polysiloxanpolyole, Polyacrylatpolyole und/oder Polymethacrylatpolyole sowie deren Mischpolymerisate, im folgenden Polyacrylatpolyole genannt.

Die Polyole weisen bevorzugt eine OH-Zahl von 30 bis 400 mg KOH/g, insbesondere zwischen 100 und 300 KOH/g, auf. Die Hydroxylzahl (OH-Zahl) gibt an, wie viel mg Kaliumhydroxid der Essigsäure-Menge äquivalent sind, die von 1 g Substanz bei der Acetylierung gebunden wird. Die Probe wird bei der Bestimmung mit Essigsäureanhydrid-Pyridin gekocht und die entstehende Säure mit Kaliumhydroxidlösung titriert (DIN 53240-2). Im Falle reiner Poly-(Meth)-Acrylate kann die OH-Zahl auch durch Berechnung auf Basis der eingesetzten OH-funktionellen Monomere ausreichend genau bestimmt werden.

Die Glasübergangstemperaturen, gemessen mit Hilfe von DSC-Messungen nach DIN-EN-ISO 11357-2, der Polyole liegen bevorzugt zwischen -150 und 100 °C, besonders bevorzugt zwischen -120°C und 80°C.

Geeignete Polyesterpolyole sind beispielsweise in EP-A-0 994 117 und EP-A-1 273 640 beschrieben. Polyurethanpolyole werden vorzugsweise durch Umsetzung von Polyesterpolyol-Präpolymeren mit geeigneten Di- oder Polyisocyanaten hergestellt und sind beispielsweise in EP-A-1 273 640 beschrieben. Geeignete Polysiloxanpolyole sind beispielsweise in der WO-A-01/09260 beschrieben, wobei die dort angeführten Polysiloxanpolyole bevorzugt in Kombination mit weiteren Polyolen, insbesondere solchen mit höheren Glasübergangstemperaturen, zum Einsatz kommen können.

Ganz besonders bevorzugt enthält die Komponente (A) ein oder mehrere Polyacrylatpolyole und/oder Polymethacrylatpolyole. Zusammen mit dem oder den Polyacrylatpolyolen und/oder Polymethacrylatpolyolen können weitere oligomere und/oder polymere Polyhydroxylgruppen-haltige Verbindungen, beispielsweise Polyesterpolyole, Polyurethanpolyole und Polysiloxanpolyole, insbesondere Polyesterpolyole, eingesetzt werden.

Die erfindungsgemäß ganz besonders bevorzugten Poly(meth)acrylatpolyole sind in der Regel Copolymerisate und weisen vorzugsweise massenmittlere Molekulargewichte Mw zwischen 1.000 und 20.000 Dalton, insbesondere zwischen 1.500 und 10.000 Dalton auf, jeweils gemessen mittels Gelpermeationschromatographie (GPC) gegen einen Polystyrolstandard.

Die Glasübergangstemperatur der Copolymerisate liegt in der Regel zwischen -100 und 100 °C, insbesondere zwischen -60 und < 20 °C (gemessen mittels DSC-Messungen nach DIN-EN-ISO 11357-2).

Die Poly(meth)acrylatpolyole weisen bevorzugt eine OH-Zahl von 60 bis 300 mg KOH/g, insbesondere zwischen 70 und 200mg KOH/g, sowie eine Säurezahl zwischen 0 und 30 mg KOH/g auf.

Die Hydroxylzahl (OH-Zahl) wird wie oben beschrieben bestimmt (DIN 53240-2). Die Säurezahl gibt hierbei die Anzahl der mg Kaliumhydroxid an, die zur Neutralisation von 1 g der jeweiligen Verbindung verbraucht wird (DIN EN ISO 2114).

Als hydroxylgruppenhaltige Monomerbausteine werden bevorzugt Hydroxyalkylacrylate und/oder Hydroxyalkylmethacrylate, wie insbesondere 2-Hydroxyethylacrylat, 2-Hydroxyethylmethacrylat, 2-Hydroxypropylacrylat, 2-Hydroxypropylmethacrylat, 3-Hydroxypropylacrylat, 3-Hydroxypropylmethacrylat, 3-Hydroxybutylacrylat, 3-Hydroxybutylmethacrylat sowie insbesondere 4-Hydroxybutylacrylat und/oder 4-Hydroxybutylmethacrylat eingesetzt.

Als weitere Monomerbausteine werden für die Poly(meth)acrylatpolyole bevorzugt Alkylacrylate und/oder Alkylmethacrylate eingesetzt, wie vorzugsweise Ethylacrylat, Ethylmethacrylat, Propylacrylat, Propylmethacrylat, Isopropylacrylat, Isopropylmethacrylat, Butylacrylat, Butylmethacrylat, Isobutylacrylat, Isobutylmethacrylat, tert-Butylacrylat, tert-Butylmethacrylat, Amylacrylat, Amylmethacrylat, Hexylacrylat, Hexylmethacrylat, Ethylhexylacrylat, Ethylhexylmethacrylat, 3,3,5-Trimethylhexylacrylat, 3,3,5-Trimethylhexylmethacrylat, Stearylacrylat, Stearylmethacrylat, Laurylacrylat oder Laurylmethacrylat, Cycloalkylacrylate und/oder Cycloalkylmethacrylate, wie Cyclopentylacrylat, Cyclopentylmethacrylat, Isobornylacrylat, Isobornylmethacrylat oder insbesondere Cyclohexylacrylat und/oder Cyclohexylmethacrylat.

Als weitere Monomerbausteine für die Poly(meth)acrylatpolyole können vinylaromatische Kohlenwasserstoffe, wie Vinyltoluol, alpha-Methylstyrol oder insbesondere Styrol, Amide oder Nitrile der Acryl- oder Methacrylsäure, Vinylester oder Vinylether, sowie in untergeordneten Mengen insbesondere Acryl- und/oder Methacrylsäure eingesetzt werden.

### Hydroxylgruppenhaltige Verbindungen (C)

Die erfindungsgemäßen Beschichtungsmittelzusammensetzungen können ggf. außer der Polyhydroxylgruppen-haltigen Komponente (A) noch ein oder mehrere, von der Komponente (A) verschiedene, monomere hydroxylgruppenhaltige Verbindungen (C) enthalten. Bevorzugt nehmen diese Verbindungen (C) einen Anteil von 0 bis 20 Gew.-%, besonders bevorzugt von 0 bis 10 Gew.-%, ganz besonders bevorzugt von 1 bis 5 Gew.-%, jeweils bezogen auf den Bindemittelanteil der Beschichtungsmittelzusammensetzung, ein.

Als hydroxylgruppenhaltige Verbindung (C) werden niedermolekulare Polyole eingesetzt.

Als niedermolekulare Polyole werden beispielsweise Diole, wie bevorzugt Ethylenglykol, Neopentylglykol, 1,2,-Propandiol, 2,2,-Dimethyl-1,3-Propandiol,1,4-Butandiol, 1,3-Butandiol, 1,5,-Pentandiol, 2,2,4-Trimethyl-1,3-pentandiol, 1,6-Hexandiol, 1,4-Cyclohexandimethanol und 1,2-Cyclohexandimethanol, sowie Polyole, wie bevorzugt Trimethylolethan, Trimethylolpropan, Trimethylolhexan, 1,2,4-Butantriol, Pentaerythritol sowie Dipentaerythritol, eingesetzt. Bevorzugt werden solche niedermolekularen Polyole in untergeordneten Anteilen der Polyolkomponente (A) beigemischt.

### Die Kombination der Komponente (B1) und der Komponente (B2) Die acyclische, aliphatische Polyisocyanat-Komponente (B2)

Es ist erfindungswesentlich, dass die Beschichtungsmittel mindestens eine, von der Komponente (B1) verschiedene, Polyisocyanatgruppenhaltige Verbindung (B2) mit freien oder blockierten Isocyanatgruppen und mit einem acyclischen, aliphatischen Polyisocyanatgrundkörper und/oder einem durch Trimerisierung, Dimerisierung, Urethan-, Biuret-, Uretdion- und/oder Allophanatbildung von einem solchen acyclischen aliphatischen Polyisocyanat abgeleiteten Polyisocyanatgrundkörper enthalten.

Die als Grundkörper für die erfindungsgemäß eingesetzten Polyisocyanatgruppenhaltigen Verbindungen (B2) dienenden acyclischen aliphatischen Polyisocyanate sind bevorzugt an sich bekannte substituierte oder unsubstituierte aliphatische Polyisocyanate. Beispiele für bevorzugte Polyisocyanate (B2) sind Tetramethylen-1,4-diisocyanat, Hexamethylen-1,6-diisocyanat, 2,2,4-Trimethylhexane-1,6-diisocyanat, Ethylendiisocyanat, 1,12-Dodecandiisocyanat und Mischungen der vorgenannten Polyisocyanate.

Weiterhin bevorzugte Polyisocyanatgrundkörper für die Komponente (B2) sind die durch Trimerisierung, Dimerisierung, Urethan-, Biuret-, Uretdion- und/oder Allophanatbildung von einem solchen acyclischen aliphatischen Polyisocyanat abgeleiteten Polyisocyanate, insbesondere das Biuret-Dimer und/oder das Allophanat-Dimer und/oder das Isocyanurat-Trimer. In einer weiteren Ausführungsform der Erfindung sind die Polyisocyanatgrundkörper für die Komponente (B2) Polyisocyanat-Präpolymerisate mit Urethan-Struktureinheiten, welche durch Umsetzung von Polyolen mit einem stöchiometrischen Überschuss an vorgenannten acyclischen aliphatischen Polyisocyanaten erhalten werden. Solche Polyisocyanat-Präpolymere sind beispielsweise in US-A-4, 598,131 beschrieben.

Besonders bevorzugte Polyisocyanatgrundkörper für die Komponente (B2) sind Hexamethylendiisocyanat und/oder dessen Biuret-Dimer und/- oder Allophanat-Dimer und/oder Isocyanurat-Trimer und/oder dessen Uretdion sowie Mischungen der genannten Polyisocyanatgrundkörper.

Ganz besonders bevorzugte Polyisocyanatgrundkörper für die Komponente (B2) sind Hexamethylendiisocyanat und/oder dessen Isocyanurat-Trimer, ggf. zusammen mit dessen Uretdion.

Die als Komponente (B2) eingesetzten acyclischen aliphatischen Polyisocyanate bzw. deren durch Trimerisierung, Dimerisierung, Urethan-, Bi uret-, Uretdion- und/oder Allophanatbildung abgeleiteten Polyisocyanate können zusätzlich noch mindestens eine Struktureinheit (I) der Formel (I)

-NR-(X-SiR"x(OR')3-x) (I),

und/oder mindestens eine Struktureinheit der Formel (II)

-N(X-SiR"x(OR')3-x)n(X'-SiR"y(OR')3-y)m (II),

enthalten, wobei
R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl ,
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R' = Ethyl und/oder Methyl,
X, X' = linearer und/oder verzweigter Alkylen oder Cycloalkylenrest mit 1 bis 20 Kohlenstoffatomen, bevorzugt X, X' = Alkylenrest mit 1 bis 4 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 0 bis 2, m = 0 bis 2, m+n = 2 sowie x, y = 0 bis 2 ist.

Bevorzugt eingesetzt werden als Komponente (B2) acyclische aliphatische Polyisocyanate mit freien oder blockierten Isocyanatgruppen bzw. deren durch Trimerisierung, Dimerisierung, Urethan-, Biuret-, und/oder Allophanatbildung abgeleiteten Polyisocyanate mit freien oder blockierten Isocyanatgruppen, die mindestens eine Struktureinheit (I) der Formel (I) und mindestens eine Struktureinheit der Formel (II) aufweisen. Die jeweiligen bevorzugten Alkoxyreste (OR') können gleich oder verschieden sein, entscheidend für den Aufbau der Reste ist jedoch, inwiefern diese die Reaktivität der hydrolysierbaren Silangruppen beeinflussen. Bevorzugt ist R' ein Alkylrest, insbesondere mit 1 bis 6 C-Atomen. Besonders bevorzugt sind Reste R', die die Reaktivität der Silangruppen erhöhen, d.h. gute Abgangsgruppen darstellen. Insofern ist ein Methoxy - Rest gegenüber einem Ethoxy - Rest und dieser wiederum gegenüber einem Propoxyrest bevorzugt. Besonders bevorzugt ist daher R' = Ethyl und/oder Methyl, insbesondere Methyl.

Des Weiteren kann die Reaktivität von organofunktionellen Silanen auch durch die Länge der Spacer X, X' zwischen Silan - Funktionalität und organischer funktioneller Gruppe, die zur Reaktion mit dem zu modifizierenden Bestandteil dient, erheblich beeinflusst werden. Beispielhaft dafür seien die "alpha" - Silane genannt, die bei der Firma Wacker erhältlich sind, und bei denen eine Methylengruppe anstelle der bei "gamma"-Silane vorhandenen Propylengruppe zwischen Si-Atom und funktioneller Gruppe ist.

Die erfindungsgemäß bevorzugt eingesetzten, mit den Struktureinheiten (I) und/oder (II) funktionalisierten Komponenten (B2) werden insbesondere durch Umsetzung von acyclischen aliphatischen Polyisocyanaten bzw. deren durch Trimerisierung, Dimerisierung, Urethan-, Biuret-, Uretdion- und/oder Allophanatbildung abgeleiteten Polyisocyanaten mit mindestens einer Verbindung der Formel (Ia)

H-NR-(X-SiR"ₓ(OR')₃₋ₓ) (Ia),

und/oder mit mindestens einer Verbindung der Formel (IIa)

HN(X-SiR"ₓ(OR')₃₋ₓ)ₙ(X'-SiR"y(OR')_{3-y})ₘ (IIa),

erhalten, wobei die Substituenten die oben genannte Bedeutung haben.

Die erfindungsgemäß besonders bevorzugt eingesetzten, mit den Struktureinheiten (I) und (II) funktionalisierten Komponenten (B2) werden besonders bevorzugt durch Umsetzung von
acyclischen aliphatischen Polyisocyanaten bzw. deren durch Trimerisierung, Dimerisierung, Urethan-, Biuret-, Uretdion und/oder Allophanatbildung abgeleiteten Polyisocyanaten
mit mindestens einer Verbindung der Formel (Ia) und mit mindestens einer Verbindung der Formel (IIa)
erhalten, wobei die Substituenten die oben genannte Bedeutung haben.

Erfindungsgemäß bevorzugte Verbindungen (IIa) sind Bis(2-ethyltrimethoxysilyl)amin, Bis(3-propyltrimethoxysilyl)amin, Bis(4-butyltrimethoxysilyl)-amin, Bis(2-ethyltriethoxysilyl)amin, Bis(3-propyltriethoxysilyl)amin und/- oder Bis(4-butyltriethoxysilyl)amin. Ganz besonders bevorzugt ist Bis(3-propyltrimethoxysilyl)amin. Solche Aminosilane sind beispielsweise unter dem Markennamen DYNASYLAN ® der Fa. DEGUSSA bzw. Silquest ® der Fa. OSI verfügbar.

Erfindungsgemäß bevorzugte Verbindungen (Ia) sind Aminoalkyl-trialkoxysilane, wie vorzugsweise 2-Aminoethyltrimethoxysilan, 2-Aminoethyltriethoxysilan, 3-Aminopropyltrimethoxysilan, 3-Aminopropyltriethoxysilan, 4-Aminobutyltrimethoxysilan, 4-Aminobutyltriethoxysilan. Besonders bevorzugte Verbindungen (la) sind N-(2- (trimethoxysilyl)ethyl)alkylamine, N-(3-(trimethoxysilyl)propyl)alkylamine, N-(4-(trimethoxysilyl)butyl) alkylamine, N-(2-(triethoxysilyl)ethyl)alkylamine, N-(3-(triethoxysilyl)propyl)-alkylamine und/oder N-(4-(triethoxysilyl)butyl)alkylamine. Ganz besonders bevorzugt ist N-(3-(trimethoxysilyl) propyl)butylamin. Solche Aminosilane sind beispielsweise unter dem Markennamen DYNASYLAN ® der Fa. DEGUSSA bzw. Silquest ® der Fa. OSI verfügbar.

Bevorzugt sind in der Komponente (B2) zwischen 10 und 90 mol-%, besonders bevorzugt zwischen 20 und 80 mol-% und ganz besonders bevorzugt zwischen 30 und 70 mol-%, der ursprünglich vorhandenen Isocyanatgruppen zu Struktureinheiten (I) und/oder (II), bevorzugt zu Struktureinheiten (I) und (II), umgesetzt worden.

### Die cycloaliphatische Polyisocyanat-Komponente (B1)

Es ist erfindungswesentlich, dass die Beschichtungsmittel mindestens eine Polyisocyanatgruppenhaltige Verbindung (B1) mit freien oder blockierten Isocyanatgruppen und mit einem cycloaliphatischen Polyisocyanatgrundkörper und/oder einem durch Trimerisierung, Dimerisierung, Urethan-, Biuret-, Uretdion- und/oder Allophanatbildung von einem solchen cycloaliphatischen Polyisocyanat abgeleiteten Polyisocyanatgrundkörper enthalten.

Die als Grundkörper für die erfindungsgemäß eingesetzten Polyisocyanatgruppenhaltigen Verbindungen (B1) eingesetzten cycloaliphatischen Polyisocyanate sind bevorzugt an sich bekannte substituierte oder unsubstituierte cycloaliphatische Polyisocyanate. Beispiele für bevorzugte Polyisocyanate (B1) sind Isophorondiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur ® W der Fa. Bayer AG) und Mischungen der vorgenannten Polyisocyanate.

Weiterhin bevorzugte Polyisocyanatgrundkörper für die Komponente (B1) sind die durch Trimerisierung, Dimerisierung, Urethan-, Biuret-, Uretdion- und/oder Allophanatbildung von einem solchen cycloaliphatischen Polyisocyanat abgeleiteten Polyisocyanate, insbesondere das Biuret-Dimer und/oder das Allophanat-Dimer und/oder das Isocyanurat-Trimer. In einer weiteren Ausführungsform der Erfindung sind die Polyisocyanatgrundkörper für die Komponente (B1) Polyisocyanat-Präpolymerisate mit Urethan-Struktureinheiten, welche durch Umsetzung von Polyolen mit einem stöchiometrischen Überschuss an vorgenannten cycloaliphatischen Polyisocyanaten erhalten werden. Solche Polyisocyanat-Präpolymere sind beispielsweise in US-A-4, 598,131 beschrieben.

Besonders bevorzugte cycloaliphatische Polyisocyanate (B1) sind Isophorondiisocyanat und 4,4'-Methylendicyclohexyldiisocyanat und/oder deren Biuret-Dimere und/oder deren Allophanat-Dimere und/oder deren Isocyanurat-Trimere.

Die als Komponente (B1) eingesetzten cycloaliphatischen Polyisocyanate bzw. deren durch Trimerisierung, Dimerisierung, Urethan-, Biuret- Uretdion- und/oder Allophanatbildung abgeleiteten Polyisocyanate können zusätzlich noch mindestens eine Struktureinheit (I) der Formel (I) und/oder mindestens eine Struktureinheit der Formel (II) enthalten.

Die mit den Struktureinheiten (I) und/oder (II) funktionalisierten Komponenten (B1) werden bevorzugt durch Umsetzung von cycloaliphatischen Polyisocyanaten bzw. deren durch Trimerisierung, Dimerisierung, Urethan-, Biuret-, Uretdion- und/oder Allophanatbildung abgeleiteten Polyisocyanate mit mindestens einer Verbindung der Formel (Ia)

H-NR-(X-SiR"ₓ(OR')₃₋ₓ) (Ia),

und/oder mit mindestens einer Verbindung der Formel (IIa)

HN(X-SiR"ₓ(OR')₃₋ₓ)ₙ(X'-SiR"_{y}(OR')_{3-y})ₘ (IIa),

erhalten, wobei die Substituenten die oben genannte Bedeutung haben.

Bevorzugt sind in der Komponente (B1) 0 bis 34 mol-%, bevorzugt weniger als 5,0 mol-%, besonders bevorzugt weniger als 2,5 mol-%, und ganz besonders bevorzugt keine der ursprünglich vorhandenen Isocyanatgruppen zu Struktureinheiten (I) und/oder zu Struktureinheiten (II) umgesetzt worden.

Es ist erfindungswesentlich, dass die Mischung der Komponenten (B1) plus (B2) sowohl Struktureinheiten (I) als auch Struktureinheiten (II) aufweist. Falls also die Komponente (B1) nur Struktureinheiten (I), aber keine Struktureinheiten (II) enthält, dann enthält die Komponente (B2) zwingend Struktureinheiten (II) sowie ggf. zusätzlich noch Struktureinheiten (I). Falls die Komponente (B1) nur Struktureinheiten (II), aber keine Struktureinheiten (I) enthält, dann enthält die Komponente (B2) zwingend Struktureinheiten (I) sowie ggf. zusätzlich noch Struktureinheiten (II).

Falls also die Komponente (B2) nur Struktureinheiten (I), aber keine Struktureinheiten (II) enthält, dann enthält die Komponente (B1) zwingend Struktureinheiten (II) sowie ggf. zusätzlich noch Struktureinheiten (I). Falls die Komponente (B2) nur Struktureinheiten (II), aber keine Struktureinheiten (I) enthält, dann enthält die Komponente (B1) zwingend Struktureinheiten (I) sowie ggf. zusätzlich noch Struktureinheiten (II).

Bevorzugte Beschichtungsmittelzusammensetzungen werden erhalten, wenn der Gesamtgehalt an Struktureinheiten (I) in der Mischung aus Komponente (B1) plus Komponente (B2) zwischen 3 und 90 mol-%, bevorzugt zwischen 5 und 70 mol-%, besonders bevorzugt zwischen 10 und 50 mol-%, ganz besonders bevorzugt zwischen 10 und 40 mol-% jeweils bezogen auf die Gesamtheit der Struktureinheiten (I) plus (II), und der Gesamtgehalt an Struktureinheiten (II) in der Mischung aus Komponente (B1) plus Komponente (B2) zwischen 97 und 10 mol-%, bevorzugt zwischen 95 und 30 mol-%, besonders bevorzugt zwischen 90 und 50 mol-% und ganz besonders bevorzugt zwischen 90 und 60 mol-%, jeweils bezogen auf die Gesamtheit der Struktureinheiten (I) plus (II), liegt.

Bevorzugt sind in der Mischung der Polyisocyanat-Komponente (B1) plus der Polyisocyanat-Komponente (B2) zwischen 10 und 80 mol-%, bevorzugt zwischen 20 und 70 mol-%, besonders bevorzugt zwischen 25 und weniger als 50 mol-% und ganz besonders bevorzugt zwischen 31 und 45 mol-%, der ursprünglich in (B1) plus (B2) vorhandenen Isocyanatgruppen zu Struktureinheiten (I) und/oder (II), bevorzugt zu Struktureinheiten (I) und (II), umgesetzt worden.

Die Komponente (B1) wird in einer solchen Menge eingesetzt, dass der Bindemittelanteil des isocyanatgruppenhaltigen Grundkörpers der Komponente (B1) zwischen 5 und 45 Gew.%, bevorzugt zwischen10 und 40 Gew.-% und besonders bevorzugt zwischen 15 und 35 Gew.-% beträgt, jeweils bezogen auf die Summe aus dem Bindemittelanteil des isocyanatgruppenhaltigen Grundkörpers der Komponente (B1) plus dem Bindemittelanteil des isocyanatgruppenhaltigen Grundkörpers der Komponente (B2).

Besonders bevorzugte Beschichtungsmittelzusammensetzungen werden erhalten, wenn in der Mischung aus Komponente (B1) plus Komponente (B2)
der Gesamtgehalt an Struktureinheiten (I) zwischen 10 und 50 mol-% und der Gesamtgehalt an Struktureinheiten (II) zwischen 90 und 50 mol-%, jeweils bezogen auf die Gesamtheit der Struktureinheiten (I) plus (II), liegt und
zwischen 25 und weniger als 50 mol-%, der ursprünglich in (B1) plus (B2) vorhandenen Isocyanatgruppen zu Struktureinheiten (I) und(II) umgesetzt worden sind
und
die Komponente (B1) in einer solchen Menge eingesetzt wird, dass der Bindemittelanteil des isocyanatgruppenhaltigen Grundkörpers der Komponente (B1) zwischen 15 und 35 Gew.% beträgt, jeweils bezogen auf die Summe aus dem Bindemittelanteil des isocyanatgruppenhaltigen Grundkörpers der Komponente (B1) plus dem Bindemittelanteil des isocyanatgruppenhaltigen Grundkörpers der Komponente (B2).

In einer weiteren Ausführungsform der Erfindung weist die Polyhydroxylgruppen-haltige Verbindung (A) neben den Hydroxylgruppen Struktureinheiten der Formel (I) und/oder der Formel (II) auf.

Struktureinheiten der Formel (I) können in die Verbindung (A) durch Einbau von Monomereinheiten mit solchen Struktureinheiten oder durch Umsetzung von Polyolen, die weitere funktionelle Gruppen aufweisen, mit einer Verbindung der Formel (Ia) eingeführt, wobei die Substituenten die obengenannte Bedeutung haben. Struktureinheiten der Formel (II) können analog in die Verbindung (A) durch Einbau von Monomereinheiten mit solchen Struktureinheiten oder durch Umsetzung von Polyolen, die weitere funktionelle Gruppen aufweisen, mit einer Verbindung der Formel (IIa) eingeführt werden, wobei die Substituenten die obengenannte Bedeutung haben. Zur Umsetzung des Polyols mit der Verbindung (Ia) und/oder (IIa) weist dieses entsprechend weitere funktionelle Gruppen auf, welche mit der sekundären Aminogruppe der Verbindung (Ia) bzw. (IIa) reagieren, wie insbesondere Säure- oder Epoxygruppen.

Monomerbausteine, die die Strukturelemente (I) und/oder (II) tragen, sind vorzugsweise Umsetzungsprodukte der Acryl- und/oder der Methacrylsäure oder von epoxygruppenhaltigen Alkylacrylaten und/oder -methacrylaten mit den oben genannten Verbindungen (Ia) und/oder (IIa).

Geeignete Polyhydroxylgruppen-haltige Verbindungen (A) mit Struktureinheiten der Formel (I) und/oder der Formel (II) sind auch in der WO 08/74489, Seite 21, Zeile 21, bis Seite 23, Zeile 18 beschrieben.

### Katalysator (D)

Die erfindungsgemäßen Beschichtungsmittelzusammensetzungen enthalten bevorzugt mindestens einen Katalysator (D) für die Vernetzung der Silangruppen. Beispiele sind Metallkomplexe mit Chelatliganden auf der Basis von Zink oder Aluminium, wie die z.B. in der WO05/03340 beschriebenen Titanate oder Lewis-Säuren, wobei aber bei der Auswahl der Katalysatoren darauf zu achten ist, dass die Katalysatoren nicht zu einer Vergilbung der Beschichtungsmittel führen. Außerdem sind einige bekanntermaßen eingesetzte Katalysatoren aus toxikologischen Gründen weniger erwünscht.

Es ist daher bevorzugt, dass als Katalysator (D) phosphorhaltige, insbesondere phosphorhaltige und stickstoffhaltige Katalysatoren eingesetzt werden. Dabei können auch Mischungen aus zwei oder mehreren verschiedenen Katalysatoren (D) eingesetzt werden.

Beispiele für geeignete phosphorhaltige Katalysatoren (D) sind substituierte Phosphonsäurediester und Diphosphonsäurediester, vorzugsweise aus der Gruppe, bestehend aus acyclischen Phosphonsäurediestern, cyclischen Phosphonsäurediestern, acyclischen Diphosphonsäurediestern und cyclischen Diphosphonsäurediestern. Derartige Katalysatoren sind beispielsweise in der deutschen Patentanmeldung DE-A-102005045228 beschrieben.

Insbesondere werden aber substituierte Phosphorsäuremonoester und Phosphorsäurediester, vorzugsweise aus der Gruppe, bestehend aus acyclischen Phosphorsäurediestern und cyclischen Phosphorsäurediestern, besonders bevorzugt Aminaddukte der Phosphorsäure-mono- und -di-ester, eingesetzt.

Ganz besonders bevorzugt werden als Katalysator (D) die entsprechenden aminblockierten Phosphorsäureester, und hier insbesondere aminblockierte Phosphorsäureethylhexylester und aminblockierte Phosphorsäurephenylester, ganz besonders bevorzugt aminblockierte Phosphorsäure-bis(2-ethylhexyl)ester eingesetzt.

Als Beispiele für Amine, mit welchem die Phosphorsäureester blockiert werden, sind insbesondere tertiäre Amine, beispielsweise bicyclische Amine, wie z. B. 1,4 Diazabicyclo [2.2.2] octan (DABCO), Diazabicyclononen (DBN), Diazabicycloundecen (DBU), Dimethyldodecylamin oder Triethylamin, zu nennen. Besonders bevorzugt werden zur Blockierung der Phosphorsäureester tertiäre Amine eingesetzt, die eine gute Wirksamkeit des Katalysators bei den Härtungsbedingungen von 140 °C gewährleisten.

Bestimmte, mit Amin blockierte Phosphorsäurekatalysatoren sind auch kommerziell erhältlich (z.B. Nacure-Typen der Fa. King Industries). Beispielsweise sei der unter der Bezeichnung Nacure 4167 von der Firma King Industries als besonders geeigneter Katalysator auf der Basis eines aminblockierten Phosphorsäureteilesters genannt.

Die Katalysatoren werden vorzugsweise in Anteilen von 0,01 bis 20 Gew.-%, besonders bevorzugt in Anteilen von 0,1 bis 10 Gew.-%, bezogen auf den Bindemittelanteil der erfindungsgemäßen Beschichtungsmittelzusammensetzung, eingesetzt. Eine geringere Wirksamkeit des Katalysators kann dabei durch entsprechend höhere Einsatzmengen teilweise kompensiert werden.

Die erfindungsgemäßen Beschichtungsmittelzusammensetzungen können noch einen weiteren Amin-Katalysator auf Basis eines bicyclischen Amins, insbesondere eines ungesättigten bicyclischen Amins, enthalten. Beispiele für geeignete Amin-Katalysatoren sind 1,5-Diazabicyclo[4.3.0]non-5-en oder 1,8-Diazabicyclo[5.4.0]undec-7-en.

Diese Amin-Katalysatoren werden vorzugsweise in Anteilen von 0,01 bis 20 Gew.-%, besonders bevorzugt in Anteilen von 0,1 bis 10 Gew.-%, bezogen auf den Bindemittelanteil der erfindungsgemäßen Beschichtungsmittelzusammensetzung, eingesetzt.

### Das Rheologiehilfsmittel (R) auf Basis pyrogener Kieselsäure

Es ist erfindungswesentlich, dass die erfindungsgemäße Beschichtungsmittelzusammensetzung mindestens ein Rheologiehilfsmittel (R) auf Basis pyrogener Kieselsäure enthält.

Die Rheologiehilfsmittel (R) auf der Basis pyrogener Kieselsäuren weisen in der Regel eine kettenförmige Struktur auf und sind Agglomerate bzw. Aggregate von Siliciumdioxid-Primärteilchen. Diese Rheologiehilfsmittel werden insbesondere durch Flammenhydrolyse von Siliciumhalogenverbindungen erhalten. Derartige Rheologiehilfsmittel sind im Handel beispielsweise unter der Bezeichnung Aerosil® der Firma Evonik Degussa erhältlich.

Wie dem Fachmann bekannt ist, lassen sich dabei durch geeignete Reaktionsbedingungen bei der Flammhydrolyse und Oberflächenmodifikationen der Siliciumdioxid-Primärteilchen die Kenngrößen und damit auch die Eigenschaften der pyrogenen Kieselsäureteilchen gezielt variieren.

So spielt beispielsweise die Primärteilchengröße der Siliciumdioxid-Teilchen eine Rolle, da im Allgemeinen mit zunehmender Primärteilchengröße die Tendenz zur Agglomeratbildung abnimmt. Außerdem bedingt eine kleine Primärteilchengröße naturgemäß eine große spezifische Oberfläche.

Ferner unterscheidet man insbesondere zwischen Rheologiehilfsmitteln (R1) auf der Basis hydrophiler Kieselsäuren und Rheologiehilfsmitteln (R2) auf der Basis hydrophober Kieselsäuren. In der Regel haben dabei Rheologiehilfsmitteln (R1) auf der Basis hydrophiler Kieselsäuren einen größeren Effekt auf die Rheologie der Beschichtungsmittelzusammensetzung.

Erfindungsgemäß kann als Rheologiehilfsmittel (R) entweder mindestens ein Rheologiehilfsmittel (R1) auf der Basis hydrophiler Kieselsäuren oder mindestens ein Rheologiehilfsmittel (R2) auf der Basis hydrophober Kieselsäuren oder eine Mischung aus mindestens einem Rheologiehilfsmittel (R1) auf der Basis hydrophiler Kieselsäuren und mindestens einem Rheologiehilfsmittel (R2) auf der Basis hydrophober Kieselsäuren eingesetzt werden.

Die mittels Flammenhydrolyse hergestellte pyrogene Kieselsäure weist an ihrer Oberfläche verschiedene funktionelle Gruppen, insbesondere Silanolgruppen und Siloxangruppen, auf. Sie ist daher als solches hydrophil und kann ohne weitere Modifizierung seiner Oberfläche als Rheologiehilfsmittel (R1) eingesetzt werden, d.h. diese Rheologiehilfsmittel (R1) bestehen bevorzugt aus pyrogener Kieselsäure.

Es können auch pyrogene Kieselsäuren, deren Oberfläche mit monomeren oder oligomeren Verbindungen modifiziert ist, in den Beschichtungsmitteln eingesetzt werden. Eine Oberflächenmodifizierung erfolgt üblicherweise durch Anbindung der an der Kieselsäurenoberfläche befindlichen Gruppen, wie beispielsweise Silanolgruppen, an monomere oder oligomere Verbindungen. Diese monomeren oder oligomeren Verbindungen enthalten daher zumindest eine gegenüber den an der Teilchenoberfläche befindlichen Gruppen affine Gruppe. Die Anbindung kann beispielsweise durch kovalente Bindung, ionische Anbindung oder Physisorption erfolgen. Der nicht zur Anbindung an die Kieselsäurepartikeloberfläche benötigte Teil der monomeren oder oligomeren Verbindungen ragt vorzugsweise ganz oder teilweise in das die Partikel umgebende Medium.

Die zur Oberflächenmodifizierung verwendeten monomeren oder oligomeren Verbindungen können neben der zur Anbindung an die Oberfläche der Kieselsäurepartikel erforderlichen Gruppe noch weitere funktionelle Gruppen enthalten, die beispielsweise in der Lage sind, mit der Bindemittelkomponente (A) zu reagieren. Eine derartige Oberflächenmodifikation gelingt beispielsweise durch Zugabe hydrolysierbarer Silane, die noch mindestens eine weitere funktionelle Gruppe tragen, zu den Kieselsäurepartikeln.

Beispiele zur Oberflächenmodifizierung der Partikel geeigneter hydrolysierbarer Silane umfassen solche Silane, die als gegenüber dem Bindemittel (A) und/oder den Vernetzungsmitteln (B1) und/oder (B2) reaktive Gruppe eine Glycidylgruppe, eine Aminogruppe, eine Hydroxylgruppe oder eine Mercaptogruppe enthalten.

Bevorzugt werden erfindungsgemäß jedoch zur Oberflächenmodifizierung monomere oder oligomere Verbindungen eingesetzt, die neben der gegenüber Silanolgruppen reaktiven Gruppe einen oder mehrere hydrophobe Reste aufweisen und so mit einer Hydrophobierung der Kieselsäurepartikel verbunden sind und daher zur Herstellung der Rheologiehilfsmitteln (R2) auf der Basis hydrophober Kieselsäuren dienen. Bevorzugt werden zur Modifizierung der Kieselsäure organofunktionelle Siliciumverbindungen mit mindestens einer Alkylgruppe mit 1 bis 50 C-Atomen, insbesondere mit 1 bis 10 C-Atomen, und mit mindestens einer hydrolysierbaren Gruppe bzw. mit mindestens einer OH- bzw. NH-Gruppe eingesetzt. Beispiele für solche Verbindungen sind Alkylalkoxysilane, insbesondere Dialkyldialkoxysilane und Alkyltrialkoxysilane, Alkylhalogensilane, insbesondere Alkylchlorsilane, bevorzugt Trialkylchlorsilane und Dialkyldichlorsilane, Alkylpolysiloxane, Dialkylpolysiloxane und Alkyldisilazane u.ä.

Als Rheologiehilfsmittel (R2) auf der Basis hydrophober Kieselsäuren werden dabei besonders bevorzugt silanisierte, pyrogen hergestellten Kieselsäuren eingesetzt, die auf der Oberfläche fixierte Trimethylsilylgruppen und/oder Dimethylsilylgruppen und/der Monomethylsilylgruppen aufweisen. Diese besonders bevorzugt eingesetzten Rheologiehilfsmittel (R2) können beispielsweise dadurch hergestellt werden, dass man ein pyrogen hergestelltes Siliciumdioxid mit Trimethylchlorsilan und/oder Dimethyldichlorsilan und/oder Monomethyltrichlorsilan oberflächenmodifiziert.

Prinzipiell nimmt die rheologiesteuernde Wirkung sowohl der Rheologiehilfsmittel (R1) auf Basis hydrophiler Kieselsäure als auch die rheologiesteuernde Wirkung sowohl der Rheologiehilfsmittel (R2) auf Basis hydrophober Kieselsäure mit abnehmender Primärteilchengröße zu. Sowohl die erfindungsgemäß eingesetzten Rheologiehilfsmittel (R1) auf der Basis hydrophiler Kieselsäuren als auch die Rheologiehilfsmittel (R2) auf der Basis hydrophober Kieselsäuren weisen daher üblicherweise eine Primärteilchengröße von <50 nm auf.

In den erfindungsgemäßen Beschichtungsmittelzusammensetzungen werden daher bevorzugt sowohl Rheologiehilfsmittel (R1) auf Basis hydrophiler Kieselsäure als auch Rheologiehilfsmittel (R2) auf Basis hydrophober Kieselsäure mit einer inneren Oberfläche nach BET von mehr als 100 m²/g, insbesondere mit einer inneren Oberfläche nach BET von mehr als 200 m²/g eingesetzt.

Beispiele für geeignete Rheologiehilfsmitteln (R1) auf der Basis hydrophiler Kieselsäuren sind auch die im Handel erhältlichen üblichen und bekannten Produkte, die beispielsweise von der Firma Degussa Evonik unter der Marke Aerosil® 380, Aerosil® 300, Aerosil® 200, Aerosil® 150 und Aerosil® 130 oder von der Firma Wacker unter der Typenbezeichnung T 40 vertrieben werden, wobei insbesondere Aerosil® 380 eingesetzt wird.

Beispiele für Rheologiehilfsmitteln (R2) auf der Basis hydrophober Kieselsäuren sind übliche und bekannte Produkte, wie beispielsweise von der Firma Degussa Evonik unter der Marke Aerosil®, insbesondere Aerosil® R816, R711, 8200, R106, R972 , R974, R805, R812 oder R812S, oder der Firma Wacker unter der Marke oder Typenbezeichnung HDK, insbesondere HDK H 15, H 18, H 20, H 30 oder 2000, vertrieben.

Die Rheologiehilfsmittel (R) bzw. (R1) bzw. (R2) werden in dem Beschichtungsmittel vorzugsweise in zumindest einem Teil des Bindemittels (A) oder - falls mehrere verschiedene Bindemittel (A) in dem erfindungsgemäßen Beschichtungsmittel eingesetzt werden - in zumindest einem Teil mindestens eines Bindemittels (A) dispergiert eingesetzt.

Das Rheologiehilfsmittel (R) wird vorzugsweise in Anteilen von 0,01 bis 10 Gew.-%, besonders bevorzugt in Anteilen von 0,5 bis 5,0 Gew.-%, bezogen auf den Bindemittelanteil der erfindungsgemäßen Beschichtungsmittelzusammensetzung, eingesetzt. Werden zwei oder mehrere verschiedene Rheologiehilfsmittel (R) eingesetzt, so liegt die Gesamtmenge all dieser Rheologiehilfsmittel (R) zwischen 0,01 und 10 Gew.-%, besonders bevorzugt zwischen 0,5 und 5,0 Gew.-%, bezogen auf den Bindemittelanteil der erfindungsgemäßen Beschichtungsmittelzusammensetzung. Wird als Rheologiehilfsmittel (R) eine Mischung aus mindestens einem Rheologiehilfsmittel (R1) auf der Basis hydrophiler Kieselsäuren und mindestens einem Rheologiehilfsmittel (R2) auf der Basis hydrophober Kieselsäuren eingesetzt, so liegt die Gesamtmenge dieser Rheologiehilfsmittel (R1) plus (R2) zwischen 0,01 und 10 Gew.-%, besonders bevorzugt zwischen 0,5 und 5,0 Gew.-%, bezogen auf den Bindemittelanteil der erfindungsgemäßen Beschichtungsmittelzusammensetzung.

### Die Kombination der Komponenten (A), (B1), (B2), ggf. (C), (D) und (R) sowie weitere Komponenten der Beschichtungsmittelzusammensetzungen

Handelt es sich um einkomponentige Beschichtungsmittelzusammensetzungen, so werden Polyisocyanatgruppen-haltige Verbindungen (B1) und (B2) gewählt, deren freie Isocyanatgruppen mit Blockierungsmitteln blockiert sind. Beispielsweise können die Isocyanatgruppen mit substituierten Pyrazolen, insbesondere mit Alkyl-substituierten Pyrazolen, wie 3-Methylpyrazol, 3,5-Dimethylpyrazol, 4-Nitro-3,5-dimethypyrazol, 4-Bromo-3,5-dimethylpyrazol u. Ä. blockiert werden. Besonders bevorzugt werden die Isocyanatgruppen der Komponente (B1) und (B2) mit 3,5-Dimethylpyrazol blockiert.

Bei den erfindungsgemäß besonders bevorzugten 2-komponentigen (2K) Beschichtungsmittelzusammensetzungen wird kurz vor der Applikation des Beschichtungsmittels eine Lackkomponente, enthaltend die Polyhydroxylgruppen-haltige Verbindung (A) sowie weitere nachfolgend beschriebene Komponenten, mit einer weiteren Lackkomponente, enthaltend die Polyisocyanatgruppen-haltigen Verbindungen (B1) und (B2) sowie gegebenenfalls weitere der nachfolgend beschriebenen Komponenten in an sich bekannter Weise vermischt, wobei in der Regel die Lackkomponente, die die Verbindung (A) enthält, den Katalysator (D) sowie einen Teil des Lösemittels enthält.

Die Polyhydroxylgruppen-haltige Komponente (A) kann in einem geeigneten Lösemittel vorliegen. Geeignete Lösemittel sind solche, die eine ausreichende Löslichkeit der Polyhydroxylgruppen-haltigen Komponente ermöglichen.

Bevorzugt werden erfindungsgemäß Beschichtungsmittelzusammensetzungen eingesetzt, die von 20 bis 79,98 Gew.-%, bevorzugt von 30 bis 69,4 Gew.-%, jeweils bezogen auf den Bindemittelanteil der Beschichtungsmittelzusammensetzung, mindestens einer Polyhydroxylgruppen-haltigen Verbindung (A), insbesondere mindestens eines Polyhydroxylgruppen-haltigen Polyacrylates (A) und/oder mindestens eines Polyhydroxylgruppen-haltigen Polymethacrylates (A), enthalten.

Bevorzugt werden erfindungsgemäß Beschichtungsmittelzusammensetzungen eingesetzt, die von 79,98 bis 20 Gew.-%, bevorzugt von 69,4 bis 30 Gew.-%, jeweils bezogen auf den Bindemittelanteil der Beschichtungsmittelzusammensetzung, der Mischung aus mindestens einer Polyisocyanat-Komponente (B1) plus mindestens einer Polyisocyanat-Komponente (B2) enthalten.

Bevorzugt enthalten die Beschichtungsmittelzusammensetzungen die Verbindungen (C) in einem Anteil von 0 bis 20 Gew.-%, besonders bevorzugt von 0 bis 10 Gew.-%, ganz besonders bevorzugt von 1 bis 5 Gew.-%, jeweils bezogen auf den Bindemittelanteil der Beschichtungsmittelzusammensetzung.

Die Gewichtsanteile des Polyols (A) und ggf. (C) und der Polyisocyanate (B1) und (B2) werden vorzugsweise solchermaßen gewählt, dass das molare Äquivalentverhältnis der Hydroxylgruppen der Polyhydroxylgruppen-haltigen Verbindung (A) plus ggf. (C) zu den Isocyanatgruppen der Komponente (B1) plus (B2) zwischen 1:0,5 und 1:1,5, bevorzugt zwischen 1:0,8 und 1:1,2 besonders bevorzugt zwischen 1:0,9 und 1:1,1, liegt.

Die Polyhydroxylgruppen-haltigen Komponente (A), die Polyhydroxylkomponente (C) und/oder die Polyisocyanat-Komponente (B1) und/oder (B2) können in einem geeigneten Lösemittel vorliegen.

Als Lösemittel (L) für die erfindungsgemäßen Beschichtungsmittel sind insbesondere solche geeignet, die im Beschichtungsmittel chemisch inert gegenüber den Verbindungen (A), (B1), (B2) und ggf. (C) sind und die auch bei der Härtung des Beschichtungsmittels nicht mit (A), ggf. (C), (B1) und (B2) reagieren. Beispiele für solche Lösemittel sind aliphatische und/oder aromatische Kohlenwasserstoffe wie Toluol, Xylol, Solventnaphtha, Solvesso 100 oder Hydrosol ® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln. Bevorzugt weisen die aprotischen Lösemittel oder Lösemittelgemische einen Wassergehalt von maximal 1 Gew.-%, besonders bevorzugt maximal 0,5 Gew.-%, bezogen auf das Lösemittel, auf.

Das bzw. die Lösemittel werden in den erfindungsgemäßen Beschichtungsmittelzusammensetzungen bevorzugt in einer solchen Menge eingesetzt, dass der Bindemittelgehalt der Beschichtungsmittelzusammensetzung mindestens 50 Gew.-%, besonders bevorzugt mindestens 60 Gew.-% beträgt. Dabei ist zu berücksichtigen, dass im Allgemeinen mit höherem Festkörpergehalt die Viskosität der Beschichtungsmittelzusammensetzung zunimmt und der Verlauf der Beschichtungsmittelzusammensetzung und somit der optische Gesamteindruck der gehärteten Beschichtung schlechter wird.

Neben den Verbindungen (A), (B1), (B2) und ggf. (C) können noch weitere Bindemittel (E) eingesetzt werden, welche vorzugsweise mit den Hydroxylgruppen des Poly(meth)acrylates (A) und/oder mit den freien Isocyanatgruppen der Verbindung (B) und/oder mit den Alkoxysilylgruppen der Verbindungen (B) reagieren und Netzwerkpunkte ausbilden können.

Beispielsweise sind als Komponente (E) Aminoplastharze und/oder Epoxydharze verwendbar. Es kommen die üblichen und bekannten Aminoplastharze in Betracht, deren Methylol- und/oder Methoxymethylgruppen teilweise mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

In der Regel werden solche Komponenten (E) in Anteilen von bis zu 40 Gew.-%, bevorzugt von bis zu 30 Gew.-%, besonders bevorzugt von bis zu 25 Gew.-%, bezogen auf den Bindemittelanteil der erfindungsgemäßen Beschichtungsmittelzusammensetzung, eingesetzt.

Die erfindungsgemäße Beschichtungsmittelzusammensetzung enthält außerdem das Rheologiehilfsmittel (R) in einer Gesamtmenge von 0,01 bis 10 Gew.-%, besonders bevorzugt in einer Gesamtmenge von 0,5 bis 5,0 Gew.-%, bezogen auf den Bindemittelanteil der erfindungsgemäßen Beschichtungsmittelzusammensetzung.

Darüber hinaus kann die erfindungsgemäße Bindemittelmischung bzw. die erfindungsgemäße Beschichtungsmittelzusammensetzung mindestens ein übliches und bekanntes, von den Komponenten (A), (B), (C), (D) und (R) verschiedenes Lackadditiv (F) in wirksamen Mengen, d.h. in Mengen vorzugsweise bis zu 30 Gew.-%, besonders bevorzugt bis zu 20 Gew.-% und insbesondere bis zu 10 Gew.-%, jeweils bezogen auf den Bindemittelanteil der Beschichtungsmittelzusammensetzung, enthalten.

Beispiele geeigneter Lackadditive (F) sind:
- insbesondere UV-Absorber;
- insbesondere Lichtschutzmittel wie HALS-Verbindungen, Benztriazole oder Oxalanilide;
- Radikalfänger;
- Slipadditive;
- Polymerisationsinhibitoren;
- Entschäumer;
- von den Komponenten (A) und (C) verschiedene Reaktivverdünner, insbesondere Reaktivverdünner, die erst durch Reaktion mit weiteren Bestandteilen bzw. Wasser reaktiv werden, wie beispielsweise Incozol oder Asparaginsäureester
- von den Komponenten (A) und (C) verschiedene Netzmittel wie Siloxane, fluorhaltige Verbindungen, Carbonsäurehalbester, Phosphorsäureester, Polyacrylsäuren und deren Copolymere oder Polyurethane;
- Haftvermittler;
- Verlaufsmittel;
- filmbildende Hilfsmittel wie Cellulose-Derivate;
- Füllstoffe wie beispielsweise Nanopartikel auf der Basis von Siliziumdioxid, Aluminiumoxid oder Zirkoniumoxid; ergänzend wird noch auf das Römpp Lexikon »Lacke und Druckfarben« Georg Thieme Verlag, Stuttgart, 1998, Seiten 250 bis 252, verwiesen;
- Flammschutzmittel.

Hierbei sind Beschichtungsmittelzusammensetzungen bevorzugt, die weniger als 7,5 Gew.-%, bevorzugt weniger als 5,0 Gew.-%, besonders bevorzugt weniger als 1,0 Gew.-%, jeweils bezogen auf den Bindemittelanteil der erfindungsgemäßen Beschichtungsmittelzusammensetzung und bezogen auf den Bindemittelanteil des Rheologiehilfsmittels auf Harnstoffbasis, und insbesondere gar kein Rheologiehilfsmittels auf Harnstoff-basis enthalten.

Besonders bevorzugt sind Beschichtungsmittelzusammensetzungen, die 30 bis 69,4 Gew.-%, bezogen auf den Bindemittelanteil der Beschichtungsmittelzusammensetzung, mindestens eines Polyhydroxylgruppen-haltigen Polyacrylates (A) und/oder mindestens eines Polyhydroxylgruppen-haltigen Polymethacrylates (A),
69,4 bis 30 Gew.-%, bezogen auf den Bindemittelanteil der Beschichtungsmittelzusammensetzung, der Polyisocyanatgruppen-haltigen Verbindungen (B1) plus (B2),
0 bis 10 Gew.-%, bezogen auf den Bindemittelanteil der Beschichtungsmittelzusammensetzung, der hydroxylgruppenhaltigen Komponente (C) 0,1 bis 10 Gew.-%, bezogen auf den Bindemittelanteil der erfindungsgemäßen Beschichtungsmittelzusammensetzung, mindestens eines Katalysators (D),
0,5 bis 5 Gew.-%, bezogen auf den Bindemittelanteil der erfindungsgemäßen Beschichtungsmittelzusammensetzung, mindestens eines Rheologiehilfsmittels (R) auf Basis pyrogene Kieselsäure,
0 bis 15 Gew.-%, bezogen auf den Bindemittelanteil der Beschichtungsmittelzusammensetzung, eines oder mehrerer Aminoplastharze und/oder eines oder mehrerer Tris(Alkoxycarbonylamino)Triazine (E) und
0 bis 20 Gew.-%, bezogen auf den Bindemittelanteil der Beschichtungsmittelzusammensetzung, mindestens eines üblichen und bekannten Lackadditivs (F)
enthalten.

Der Bindemittelanteil der Beschichtungsmittelzusammensetzung wird vor der Vernetzung dadurch bestimmt, dass eine kleine Probe (P) der Beschichtungsmittelzusammensetzung eingewogen und daran anschließend der Festkörper bestimmt wird, indem für 60 Minuten bei 130°C getrocknet wird, abgekühlt wird und dann erneut gewogen wird. Der Rückstand entspricht dem Bindemittelanteil der Probe (P). Der Bindemittelanteil der Beschichtungsmittelzusammensetzung in Gew.-% ergibt sich dann entsprechend aus 100 multipliziert mit dem Quotient aus dem Gewicht des Rückstandes der Probe (P) nach Trocknung bei 130°C geteilt durch das Gewicht der Probe (P) vor der Trocknung.

Der Bindemittelanteil der einzelnen Komponenten (A) bzw. (B1) bzw. (B2) bzw. (C) des Beschichtungsmittels wird analog dadurch bestimmt, dass eine kleine Probe (P) der jeweiligen Komponente (A) bzw. (B1) bzw. (B2) bzw. (C) eingewogen und daran anschließend der Festkörper bestimmt wird, indem für 60 Minuten bei 130°C getrocknet wird, abgekühlt wird und dann erneut gewogen wird. Der Bindemittelanteil der Komponente in Gew.-% ergibt sich dann entsprechend aus 100 multipliziert mit dem Quotient aus dem Gewicht des Rückstandes der jeweiligen Probe (P) nach Trocknung bei 130°C geteilt durch das Gewicht der jeweiligen Probe (P) vor der Trocknung.

In einer weiteren Ausführungsform der Erfindung kann die erfindungsgemäße Bindemittelmischung bzw. die erfindungsgemäße Beschichtungsmittelzusammensetzung noch weitere Pigmente und/oder Füllstoffe enthalten und zur Herstellung pigmentierter Topcoats bzw. pigmentierter Undercoats oder Füller, insbesondere pigmentierter Topcoats, dienen. Die dafür eingesetzten Pigmente und/oder Füllstoffe sind dem Fachmann bekannt. Die Pigmente werden üblicherweise in einer solchen Menge eingesetzt, dass das Pigment-zu-Bindemittel-Verhältnis zwischen 0,05: 1 und 1,5: 1 liegt, jeweils bezogen auf den Bindemittelanteil der Beschichtungsmittelzusammensetzung.

Da die aus den erfindungsgemäßen Beschichtungsmitteln hergestellten erfindungsgemäßen Beschichtungen auch auf bereits ausgehärteten Elektrotauchlackierungen, Füllerlackierungen, Basislackierungen oder üblichen und bekannten Klarlackierungen hervorragend haften, eignen sie sich neben dem Einsatz in der Automobilserien(OEM)lackierung ausgezeichnet für die Autoreparaturlackierung und/oder für die Beschichtung von Automobilanbauteilen und/oder die Beschichtung von Nutzfahrzeugen.

Die Applikation der erfindungsgemäßen Beschichtungsmittelzusammensetzungen kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung).

Vorteilhafterweise erfolgt die thermische Härtung bei einer Temperatur von 20 bis 200°C, bevorzugt 40 bis 190°C und insbesondere 50 bis 180°C, während einer Zeit von 1 min bis zu 10 h, bevorzugt 2 min bis 5 h und insbesondere 3 min bis 3h, wobei bei niedrigen Temperaturen auch längere Härtezeiten zur Anwendung kommen können. Für die Automobilreparaturlackierung und für die Lackierung von Kunststoffteilen sowie die Lackierung von Nutzfahrzeugen werden dabei üblicherweise niedrigere Temperaturen angewandt, die bevorzugt zwischen 20 und 80°C, insbesondere zwischen 20 und 60°C liegen.

Die erfindungsgemäßen Beschichtungsmittel eignen sich hervorragend als dekorative, schützende und/oder effektgebende, Beschichtungen und Lackierungen von Karosserien von Fortbewegungsmitteln (insbesondere Kraftfahrzeuge, wie Fahrräder, Motorräder, Busse, LKW oder PKW) oder von Teilen hiervon; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Die erfindungsgemäßen Beschichtungsmittelzusammensetzungen können daher beispielsweise auf ein ggf. vorbeschichtetes Substrat aufgebracht werden, wobei die erfindungsgemäßen Beschichtungsmittel sowohl pigmentiert als auch unpigmentiert sein können. Insbesondere werden die erfindungsgemäßen Beschichtungsmittelzusammensetzungen und Lackierungen, insbesondere die Klarlackierungen, in dem technologisch und ästhetisch besonders anspruchsvollen Gebiet der Automobilserienlackierung (OEM) und zur Beschichtung von Kunststoff-Anbauteilen für Pkw-Karosserien, insbesondere für Karosserien von Pkw der Oberklasse, wie z. B. für die Herstellung von Dächern, Heckklappen, Motorhauben, Kotflügeln, Stoßstangen, Spoilern, Schwellern, Schutzleisten, seitlichen Verkleidungen u.Ä., der Lackierung von Nutzfahrzeugen, wie beispielsweise von Lastkraftfahrzeugen, kettenbetriebenen Baufahrzeugen, wie z.B. Kranfahrzeugen, Radladern und Betonmischern, Omnibussen, Schienenfahrzeugen, Wasserfahrzeugen, Fluggeräten sowie landwirtschaftlichen Geräten wie Traktoren und Mähdreschern, und Teilen hiervon sowie der Automobilreparaturlackierung eingesetzt, wobei die Automobilreparaturlackierung sowohl die Reparatur der Serienlackierung an der Linie als auch die Reparatur von lokalen Defekten, wie beispielsweise Kratzern, Steinschlagschäden u.Ä., als auch die komplette Neulackierung in entsprechenden Reparaturbetrieben und Autolackierereien zur Aufwertung von Fahrzeugen umfasst.

Die Kunststoffteile bestehen üblicherweise aus ASA, Polycarbonaten, Blends aus ASA und Polycarbonaten, Polypropylen, Polymethylmethacrylaten oder schlagzäh modifizierte Polymethylmethacrylaten, insbesondere aus Blends aus ASA und Polycarbonaten, bevorzugt mit einem Polycarbonatanteil > 40%, insbesondere > 50%, verwendet.

Unter ASA werden dabei im Allgemeinen schlagzähmodifizierte Styrol/-Acrylnitril-Polymerisate verstanden, bei denen Pfropfcopolymerisate von vinylaromatischen Verbindungen, insbesondere Styrol, und von Vinylcyaniden, insbesondere Acrylnitril, auf Polyalkylacrylatkautschuken in einer Copolymermatrix aus insbesondere Styrol und Acrylnitril, vorliegen.

Besonders bevorzugt werden die erfindungsgemäßen Beschichtungsmittelzusammensetzungen in mehrstufigen Beschichtungsverfahren eingesetzt, insbesondere bei Verfahren, bei dem auf ein gegebenenfalls vorbeschichtetes Substrat zunächst eine pigmentierte Basislackschicht und danach eine Schicht mit der erfindungsgemäßen Beschichtungsmittelzusammensetzung aufgetragen werden. Gegenstand der Erfindung sind daher auch effekt- und/oder farbgebende Mehrschichtlackierungen aus mindestens einer pigmentierten Basislackschicht und mindestens einer darauf angeordneten Klarlackschicht, die dadurch gekennzeichnet sind, dass die Klarlackschicht aus der erfindungsgemäßen Beschichtungsmittelzusammensetzung hergestellt worden ist.

Es können sowohl wasserverdünnbare Basislacke als auch Basislacke auf Basis von organischen Lösemitteln eingesetzt werden. Geeignete Basislacke sind beispielsweise in der EP-A-0 692 007 und in den dort in Spalte 3, Zeilen 50ff. angeführten Dokumenten beschrieben. Bevorzugt wird der aufgebrachte Basislack zunächst getrocknet, das heißt dem Basislackfilm wird in einer Abdunstphase wenigstens ein Teil des organischen Lösemittels beziehungsweise des Wassers entzogen. Die Trocknung erfolgt vorzugsweise bei Temperaturen von Raumtemperatur bis 80°C. Nach der Trocknung wird die erfindungsgemäße Beschichtungsmittelzusammensetzung aufgebracht. Anschließend wird die Zweischichtlackierung bevorzugt unter bei der Automobilserienlackierung angewandten Bedingungen bei Temperaturen von 20 bis 200°C während einer Zeit von 1 min bis zu 10 h eingebrannt, wobei bei den für die Automobilreparaturlackierung angewandten Temperaturen, die im Allgemeinen zwischen 20 und 80°C, insbesondere zwischen 20 und 60°C liegen, auch längere Härtzeiten zur Anwendung kommen können.

In einer weiteren bevorzugten Ausführungsform der Erfindung wird die erfindungsgemäße Beschichtungsmittelzusammensetzung als transparenter Klarlack zur Beschichtung von Kunststoffsubstraten, insbesondere von Kunststoff-Anbauteilen, eingesetzt. Die Kunststoffanbauteile werden bevorzugt ebenfalls in einem mehrstufigen Beschichtungsverfahren beschichtet, bei dem auf ein gegebenenfalls vorbeschichtetes oder ein zur besseren Haftung der nachfolgenden Beschichtungen vorbehandeltes Substrat (z.B. Beflammen, Corona- oder Plasma-Behandlung des Substrats) zunächst eine pigmentierte Basislackschicht und danach eine Schicht mit der erfindungsgemäßen Beschichtungsmittelzusammensetzung aufgetragen werden.

### Beispiele

**Herstellbeispiel für das in den Vergleichsbeispielen eingesetzte Härtersystem VB2-1 auf Basis des Isocyanurates von Hexamethylendiisocyanat (Silanisierungsgrad bezogen auf NCO molar: 34 mol-%, molares Verhältnis der Struktureinheiten (I) zu den Struktureinheiten (II) = 50:50)**

In einem Reaktionsgefäß werden 33,5 Gewichtsteile trimerisiertes Hexamethyl-1,6-diisocyanat (Desmodur® N3300, Firma Bayer, Leverkusen) und 28 Gewichtsteile Butylacetat vorgelegt. Unter Rückflusskühlung, Stickstoffüberschleierung und Rühren wird eine Mischung aus 7,0 Gewichtsteilen N-[3-(trimethoxysilyl)-propyl]-butylamin (Dynasylan® 1189, Firma EVONIK, Rheinfelden) und 10,0 Gewichtsteilen Bis -[3 trimethoxysilyl- propyl] amin (Dynasylan® 1124, EVONIK, Rheinfelden) so zugetropft, dass eine Temperatur von 50-60°C nicht überschritten wird. Das Reaktionsgemisch wird gerührt, bis der mittels Titration ermittelte NCO-Wert den theoretisch errechneten NCO-Wert von 6,1 Gew.-% erreicht hat. Das so erhaltene Gemisch weist einen theoretischen Bindemittelgehalt von 64 Gew.-% auf.

**Herstellbeispiel für das in den erfindungsgemäßen Beispielen B1 bis B3 eingesetzte Härtersystem (B1-1) plus (B2-1) (molares Verhältnis der Struktureinheiten (I) zu den Struktureinheiten (II) in der Verbindung (B2-1) = 50:50, einem Silanisierungsgrad der Verbindung (B2-1) von 41 mol-% entsprechend einem Silanisierungsgrad bezogen auf die ursprünglich in der Verbindung (B1-1) plus der Verbindung (B2-1) vorhandenen Isocyanatgruppen von 34 mol-% und einem Bindemittelanteil des Polyisocyanatgrundkörpers der Komponente (B1-1) von 20 Gew.%, bezogen auf die Summe aus dem Bindemittelanteil des Polyisocyanatgrundkörpers der Komponente (B1-1) und dem Bindemittelanteil des Polyisocyanatgrundkörpers der Komponente (B2-1))** In einem Reaktionsgefäß werden 28 Gewichtsteile trimerisiertes Hexamethyl-1,6-diisocyanat (Desmodur® N3300, Firma Bayer, Leverkusen) und 24 Gewichtsteile Butylacetat vorgelegt. Unter Rückflusskühlung, Stickstoffüberschleierung und Rühren wird eine Mischung aus 7,0 Gewichtsteilen N-[3-(trimethoxysilyl)-propyl]-butylamin (Dynasylan® 1189, Firma EVONIK, Rheinfelden) und 10,0 Gewichtsteilen Bis -[3 trimethoxysilylpropyl] amin (Dynasylan® 1124, EVONIK, Rheinfelden) so zugetropft, dass eine Temperatur von 50-60°C nicht überschritten wird. Das Reaktionsgemisch wird gerührt bis der mittels Titration ermittelte NCO-Wert den theoretisch errechneten NCO-Wert von 5,2 Gew.-% erreicht hat. Anschließend werden 10 Gewichtsteile trimerisiertes Isophorondiisocyanat (Desmodur® Z4470, 70%ig in Solventnaphta) zugegeben. Das so erhaltene Gemisch weist einen NCO-Wert von 6,1 Gew.-% auf. Das so erhaltene Gemisch weist einen theoretischen Festkörpergehalt von 65 Gew.-% auf.

**Herstellbeispiel für das eingesetzte Härtersystem (B1-2) plus (B2-2) (molares Verhältnis der Struktureinheiten (I) zu den Struktureinheiten (II) in der Verbindung (B2-2) = 10:90, einem Silanisierungsgrad der Verbindung (B2-2) von 33 mol-% entsprechend einem Silanisierungsgrad bezogen auf die ursprünglich in der Verbindung (B1-2) plus der Verbindung (B2-2) vorhandenen Isocyanatgruppen von 31 mol-% und einem Bindemittelanteil des Polyisocyanatgrundkörpers der Komponente (B1-2) von 5 Gew.%, bezogen auf die Summe aus dem Bindemittelanteil des Polyisocyanatgrundkörpers der Komponente (B1-2) und dem Bindemittelanteil des Polyisocyanatgrundkörpers der Komponente (B2-2))**

In einem Reaktionsgefäß werden 24 Gewichtsteile trimerisiertes Hexamethyl-1,6-diisocyanat (Desmodur® 3300, Firma Bayer, Leverkusen) und 22 Gewichtsteile Butylacetat vorgelegt. Unter Rückflusskühlung, Stickstoffüberschleierung und Rühren wird eine Mischung aus 1,0 Gewichtsteilen N-[3-(trimethoxysilyl)-propyl]-butylamin (Dynasylan® 1189, Firma EVONIK, Rheinfelden) und 12,5 Gewichtsteile Bis -[3 trimethoxysilylpropyl] amin (Dynasylan® 1124, EVONIK, Rheinfelden) so zugetropft, dass eine Temperatur von 50-60°C nicht überschritten wird. Das Reaktionsgemisch wird gerührt, bis der mittels Titration ermittelte NCO-Wert den theoretisch errechneten NCO-Wert von 5,9 Gew.-% erreicht hat. Anschließend werden 2,0 Gewichtsteile trimerisiertes Isophorondiisocyanat (Desmodur® Z4470, 70%ig in Solventnaphta) zugegeben. Das so erhaltene Gemisch weist einen NCO-Wert von 6,1 Gew.-% auf. Das so erhaltene Gemisch weist einen theoretischen Festkörpergehalt von 63 Gew.-% auf.

### Herstellbeispiel Bindemittel (A1) für Stammlack:

In einem, mittels Ölumlaufthermostat beheizbaren, doppelwandigen 4-I Edelstahlkessel, ausgestattet mit Thermometer, Ankerrührer, 2 Tropftrichtern und Rückflusskühler wird Lösungsmittel zur Polymerisation vorgelegt. In einem der Tropftrichter wird die Monomerenmischung, in dem zweiten Tropftrichter die Intiatorlösung, enthaltend einen geeigneten Initiator (i.d.R. ein Peroxid), vorgelegt. Die Vorlage wird auf eine Polymerisationstemperatur von 140°C aufgeheizt. Nach Erreichen der Polymerisationstemperatur wird zunächst der Initiatorzulauf gestartet. 15 Minuten nach Beginn des Initiatorzulaufes wird der Monomerenzulauf (Dauer 240 Minuten) gestartet. Der Initiatorzulauf wird so eingestellt, dass er nach Beendigung des Monomerenzulaufs noch weitere 30 Minuten nachläuft. Nach Beendigung des Initiatorzulaufes wird die Mischung für weitere 2h bei 140°C gerührt und anschließend auf Raumtemperatur abgekühlt. Anschließend wird die Reaktionsmischung mit Lösemittel auf den in Tabelle 1 angegebenen Bindemittelgehalt eingestellt.

**Tabelle 1: Zusammensetzung des Polymethacrylates (A1) in Gew.-Teilen und Kennzahlen des Polymethacrylates (A1) (Säurezahl experimentell bestimmt, OHZ theoretisch berechnet, Tg theoretisch berechnet)**

| Komponente | Gew.-TI. |
|---|---|
| Styrol | 8,0 |
| n-Butyl methacrylat | 8,0 |
| Acrylsäure | 0,6 |
| 4-Hydroxybutylacrylat | 12,0 |
| 2-Hydroxyethylacrylat | 12,0 |
| n-Butylacrylat | 19,0 |
| Bindemittelgehalt 1h 150°C | 65% |
| Säurezahl (gemessen) [mg KOH/g] | 8-12 |
| OH-Zahl berechnet [mg KOH/g] | 175 |
| Tg (FOX) [°C] | -27 |

### Herstellung des erfindungsgemäßen Rheologiehilfsmittels (R1) auf Basis hydrophiler Kieselsäuren

Die beiden ersten Positionen in Tabelle 2 (Bindemittel (A1) und Lösemittel werden in der angegebenen Reihenfolge in einen Dissolver zugegeben. Die letzte Position (Aerosil® 380, handelsübliches Rheologiehilfsmittel auf Basis hydrophiler pyrogener Kieselsäure der Firma Evonik Degussa mit einer mittleren Primärteilchengröße von 7 nm, einer BET-Oberfläche in Anlehnung an DIN 66131 von 380 m²/g und einem SiO₂-Gehalt >99,8%, bezogen auf die 2 Stunden bei 1000°C geglühte Substanz) wird unter maximaler Scherung zugegeben. Danach wird für 30 Minuten dispergiert. Anschließend wird in einer Rührwerksmühle mit Mahlkörpern 0,06-0,08 mm und einem Energieeintrag von 0,14-0,18 kWh pro Kg das Mahlgut weiter dispergiert. Die Temperatur des Mahlgutes soll hierbei 65°C nicht überschreiten.

**Tabelle 2: Zusammensetzung des Rheologiehilfsmittels (R1) auf Basis hydrophiler Kieselsäuren**

| Position | Komponente | Gew.-Teile |
|---|---|---|
| 1 | Polyacrylat (A1) | 75 |
| 2 | Butylacetat | 15 |
| 3 | AEROSIL® 380 | 10 |

### Herstellung des erfindungsgemäßen Rheologiehilfsmittels (R2) auf Basis hydrophober Kieselsäuren

Die ersten drei Positionen in Tabelle 3 (Bindemittel (A1) und Lösemittel) werden in der angegebenen Reihenfolge in einen Dissolver zugegeben. Die letzte Position (Aerosil® R812, handelsübliches Rheologiehilfsmittel auf Basis hydrophober pyrogener Kieselsäure der Firma Evonik Degussa mit einer mittleren Primärteilchengröße von 7 nm, einer BET-Oberfläche in Anlehnung an DIN 66131 von 260 m²/g und einem SiO₂-Gehalt >99,8%, bezogen auf die 2 Stunden bei 1000°C geglühte Substanz) wird unter maximaler Scherung zugegeben. Danach wird für 30 Minuten dispergiert. Anschließend wird in einer Rührwerksmühle mit Mahlkörpern 0,06-0,08 mm und einem Energieeintrag von 0,14-0,18 kWh pro Kg das Mahlgut weiter dispergiert. Die Temperatur des Mahlgutes soll hierbei 65°C nicht überschreiten.

**Tabelle 3: Zusammensetzung des Rheologiehilfsmittels (R2) auf Basis hydrophober Kieselsäuren**

| Position | Komponente | Gew.-Teile |
|---|---|---|
| 1 | Polyacrylat (A1) | 45 |
| 2 | Butylacetat | 20 |
| 3 | Butanol | 25 |
| 4 | AEROSIL® R812 | 10 |

### Formulierung der Beschichtungsmittel der erfindungsgemäßen Beispiele B1 bis B6 und des Beschichtungsmittel der Vergleichsbeispiele V1 bis V4 sowie der entsprechenden Beschichtungen der Beispiele 1 bis 6 und der Vergleichsbeispiele V1 bis V4

Zur Herstellung der Stammlacke (S1), (S2), (S4), (S5) und (S6) der erfindungsgemäßen Beispiele und des Stammlackes (S3) der Vergleichsbeispiele werden die in Tabelle 4 angegebenen Bestandteile in angegebener Reihenfolge (von oben beginnend) in einem geeigneten Gefäß in dieser Reihenfolge eingewogen und innig miteinander verrührt.

**Tabelle 4: Zusammensetzung der Stammlacke S1 bis S6 in Gew.-Teilen**

| Position | Komponente | Gew.-Teile Stammlack (S1) | Gew.-Teile Stammlack (S2) | Gew.-Teile Stammlack (S3) | Gew.-Teile Stammlack (S4) | Gew.-Teile Stammlack (S5) | Gew.-Teile Stammlack (S6) |
|---|---|---|---|---|---|---|---|
| 1 | Polyacrylat (A1) | 60 | 60 | 60 | 60 | 60 | 60 |
| 2a1 | Rheologieagens (R1) | 15 | | | | 5 | 10 |
| 2a2 | Rheologieagens (R2) | | 15 | | 20 | 10 | |
| 2a3 | Rheologieagens Setalux® 91756¹⁾ | | | 15 | | | 5 |
| 3 | TINUVIN® 384²⁾ | 1,5 | 1,5 | 1,5 | 1,5 | 1,5 | 1,5 |
| 4 | TINUVIN® 292³⁾ | 1,5 | 1,5 | 1,5 | 1,5 | 1,5 | 1,5 |
| 5 | BYK® 325 ⁴⁾ | 0,2 | 0,2 | 0,2 | 0,2 | 0,2 | 0,2 |
| 6 | Nacure® 4167 ⁵⁾ | 2,3 | 2,3 | 2,3 | 2,3 | 2,3 | 2,3 |
| 7 | Butylacetat | 23 | 23 | 23 | 23 | 23 | 23 |

| | | | | | | | |
|---|---|---|---|---|---|---|---|
| Erläuterungen zu Tabelle 4: ¹⁾ Setalux® 91756 = handelsübliches Rheologieagens der Firma Nuplex Resins, Niederlande, auf Harnstoff-Basis, gelöst bzw. dispergiert in einem Polyacrylat-Bindemittel, mit einem nichtflüchtigen Anteil von 60 Gew.-% ²⁾ Tinuvin® 384 = handelsübliches Lichtschutzmittel auf Basis eines Benztriazols der Firma BASF S.E. ³⁾ Tinuvin® 292 = handelsübliches Lichtschutzmittel auf Basis eines sterisch gehinderten Amins der Firma BASF S.E. ⁴⁾ Byk® 325 = handelsübliches, polyethermodifiziertes Polymethylalkylsiloxan der Firma Byk Chemie ⁵⁾ Nacure® 4167 = handelsüblicher Katalysator auf Basis von aminblockiertem Phosphorsäureteilester der Firma King Industries, nicht flüchtiger Anteil 25% | | | | | | | |

Zur Herstellung der Beschichtungsmittel der erfindungsgemäßen Beispiele B1 bis B6 und der Beschichtungsmittel der Vergleichsbeispiele V1 bis V4 werden die in Tabelle 5 angegebenen Bestandteile in angegebener Reihenfolge (von oben beginnend) in einem geeigneten Gefäß in dieser Reihenfolge eingewogen und innig miteinander verrührt.

**Tabelle 5: Zusammensetzung der Beschichtungsmittel der Beispiele B1 bis B6 und der Vergleichsbeispiele V1 bis V4 in Gew.-Teilen**

| | Vergleichsbeispiel V1 | Beispiel B1 | Vergleichsbeispiel V2- | Beispiel B2 | Vergleichsbeispiel V3 | Vergleichsbeispiel V4 | Beispiel B3 | Beispiel B4 | Beispiel B5 | Beispiel B6 |
|---|---|---|---|---|---|---|---|---|---|---|
| Stammlack (S1) | 100 | 100 | - | - | - | - | - | - | - | 100 |
| Stammlack (S2) | - | - | 100 | 100 | - | - | - | - | - | |
| Stammlack (S3) | - | - | - | - | 100 | 100 | - | - | - | |
| Stammlack (S4) | - | - | - | - | - | - | 100 | - | - | |
| Stammlack (S5) | - | - | - | - | - | - | - | 100 | - | |
| Stammlack (S6) | - | - | - | - | - | - | - | - | 100 | |
| Härter VB2-1 | 100 | - | 100 | - | 100 | - | - | - | - | |
| Härter B1-1 + B2-1 | - | 100 | - | 100 | - | 100 | 100 | 100 | 100 | |
| Härter B1-1 + B2-1 | | | | | | | | | | 100 |

Die so erhaltenen Beschichtungsmittel der Beispiele B1 bis B6 und der Vergleichsbeispiele V1 bis V4 werden auf Bonderblechen (mit einer handelsüblichen KTL und mit einem handelsüblichen konventionellen wasserbasierten Füller beschichtet), lackiert mit schwarzem Wasserbasislack, mit einer Fließbecherpistole appliziert und 20 Minuten bei 140°C senkrecht eingebrannt. Die Bonderbleche wurden vor der Füllerbeschichtung mit einem handelsüblichen Oberflächenrauigkeitsmessgerät vermessen und der Ra Wert ermittelt. Es wird einmal auf "rauer" Qualität (Ra ∼0,5-0,6) und einmal auf "glatter" Qualität (Ra∼0,2-0,3) appliziert. Die Schichtdicke des Klarlackes beträgt ∼40 µm, die des Basislackes ∼15 µm. Anschließend wird der Glanz mit Hilfe des Glanzmessgerätes micro-haze plus, Firma Byk bestimmt. Die Prüfergebnisse sind in Tabelle 6 aufgeführt.

Nach 2h Lagerung bei Umgebungstemperatur wird auf dem gehärteten Klarlackblech eine Schleifstelle gesetzt (mit exzentrischem Druckluft-Schwingschleifer von 3M, 10000 U/min, Schleifblüte: 3M Trizact 3000er Körnung). Diese Schleifstelle wird anschließend mit Polierpaste aufpoliert (rotativer Polierprozess, Lammfellscheibe, Polierpaste Menzerna Nanopoliercreme PO 106 FA). Anschließend wird der Glanz mit Hilfe des Glanzmessgerätes micro-haze plus, Firma Byk bestimmt. Die Prüfergebnisse sind in Tabelle 6 aufgeführt.

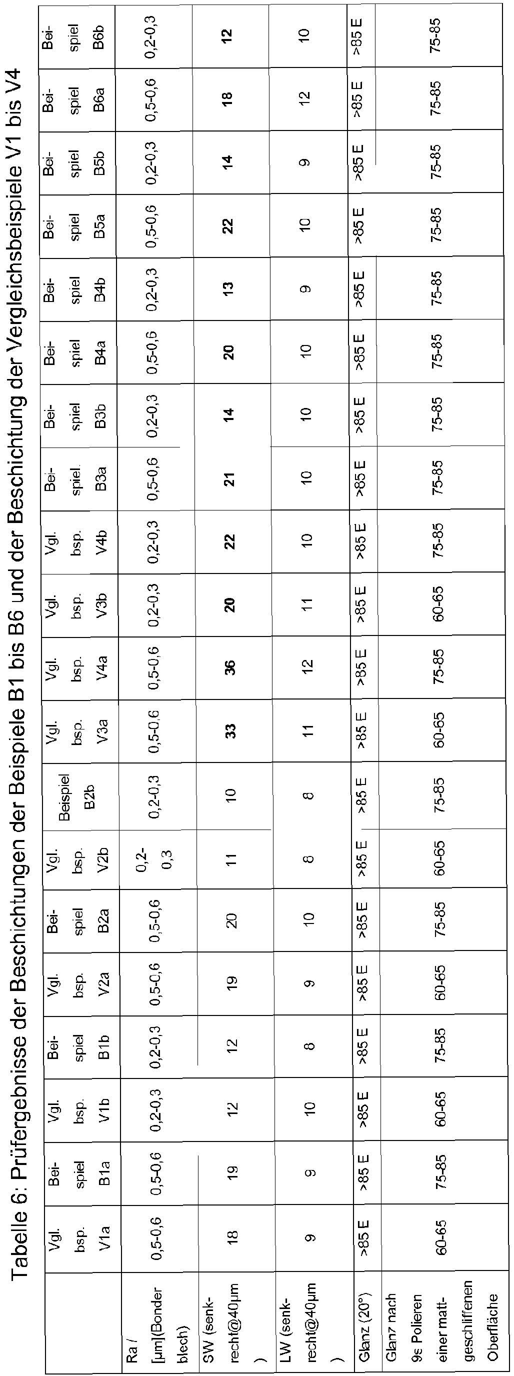

### Diskussion der Prüfergebnisse

Die Beschichtungen der Vergleichsbeispiele V3 und V4 auf Basis von Klarlacken mit einem Rheologiehilfsmittel auf Harnstoff-Basis zeigen bei Applikation auf gehärteten Füllerbeschichtungen stets signifikant höhere SW Werte bei Klarlackschichtstärken von 40 µm als die erfindungsgemäßen Systeme, die auf Rheologiehilfsmitteln auf Basis pyrogener Kieselsäure basieren. Dieser Unterschied zeigt sich etwas deutlicher, wenn ein rauer Untergrund (raue Qualität der Elektrotauchlackierung) verwendet wird.

Demgegenüber zeigen alle Beschichtungen auf Basis von Klarlacken mit einem Rheologiehilfsmittel auf Basis pyrogener Kieselsäure sehr deutlich verbesserte Short Wave Werte bei einer Klarlackschichtdicke von 40 µm, und zwar unabhängig davon, ob als Rheologiehilfsmittel eine hydrophil modifizierte pyrogene Kieselsäure ("Aerosil® 380", Rheologiehilfsmittel (R1), Beispiele B1 a, B1 b, B5a, B5b, B6a und B6b sowie Vergleichsbeispiele V1 a und V1 b) oder eine hydrophob modifizierte pyrogene Kieselsäure ("Aerosil® R812", Rheologiehilfsmittel (R2), Beispiele B2a, B2b, B3a, B3b, B4a und B4b sowie Vergleichsbeispiele V2a und V2b) eingesetzt wurde. Auch Systeme, in denen hydrophobe und hydrophile Aerosilpasten gemischt werden (B4a und B4b) oder der Anteil der harnstoffbasierten Rheologiesteurung verringert und mit Rheologiehilfsmitteln auf Basis pyrogener Kieselsäure partiell kompensiert wird (B5a und B5b), zeigen diese Verbesserung. Selbstverständlich ist der Vorteil auch konzentrationsabhängig, jedoch wird in einem breiten Rahmen ein gutes Resultat erzeugt, wie die Beispiele B3a und B3b belegen.

Der Vergleich der erfindungsgemäßen Beispiele B1 a und B1 b mit den entsprechenden Vergleichsbeispielen V1 a und V1 b sowie der Vergleich der erfindungsgemäßen Beispiele B2a und B2b mit den entsprechenden Vergleichsbeispielen V2a und V2b wiederum verdeutlicht, dass durch die erfindungsgemäße Verwendung der Härtermischung mit einem aliphatischen Isocyanatgrundkörper und einem cycloaliphatischen Isocyanatgrundkörper die Polierbarkeit der resultierenden Beschichtungen signifikant verbessert wird, und dies unabhängig vom jeweils verwendeten Rheologiehilfsmittel.

Je nach Polarität der Lösemittel der Lacke können außerdem durch Mischungen aus mindestens einem Rheologiehilfsmittel (R1) auf der Basis hydrophiler Kieselsäuren und mindestens einem Rheologiehilfsmittel (R2) auf der Basis hydrophober Kieselsäuren wie im Beispiel B4 die rheologischen Eigenschaften, insbesondere die Läuferstabililtät der Beschichtungen, optimiert werden.

## Patentansprüche

1. Nichtwässrige Beschichtungsmittelzusammensetzung enthaltend
(A) mindestens eine Polyhydroxylgruppenhaltige Verbindung (A),
(B1) mindestens eine Polyisocyanatgruppenhaltige Verbindung (B1) mit freien oder blockierten Isocyanatgruppen und mit einem cycloaliphatischen Polyisocyanatgrundkörper und/oder einem durch Trimerisierung, Dimerisierung, Urethan-, Biuret-, Uretdion- und/- oder Allophanatbildung von einem solchen cycloaliphatischen Polyisocyanat abgeleiteten Polyisocyanatgrundkörper,
(B2) mindestens eine, von der Komponente (B1) verschiedene Polyisocyanatgruppenhaltige Verbindung (B2) mit freien oder blockierten Isocyanatgruppen und mit einem acyclischen, aliphatischen Polyisocyanatgrundkörper und/oder einem durch Trimerisierung, Dimerisierung, Urethan-, Biuret-, Uretdion- und/oder Allophanatbildung von einem solchen acyclischen aliphatischen Polyisocyanat abgeleiteten Polyisocyanatgrundkörper,
(D) mindestens einen Katalysator (D) für die Vernetzung von Silangruppen
und
(R) mindestens ein Rheologiehilfsmittel (R) auf Basis pyrogener Kieselsäure,
wobei die Komponente (B1) und/oder die Komponente (B2) mindestens eine Struktureinheit der Formel (I)
-NR-(X-SiR"x(OR')3-x) (I),
und/oder mindestens eine Struktureinheit der Formel (II)
-N(X-SiR"x(OR')3-x)n(X'-SiR"y(OR')3-y)m (II),
mit
R = Wasserstoff, Alkyl, Cycloalkyl, Aryl oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
R' = Wasserstoff, Alkyl oder Cycloalkyl, wobei die Kohlenstoffkette durch nicht benachbarte Sauerstoff-, Schwefel- oder NRa-Gruppen unterbrochen sein kann,
X,X' = linearer und/oder verzweigter Alkylen oder Cycloalkylenrest mit 1 bis 20 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann,
n = 0 bis 2, m = 0 bis 2, m+n = 2 sowie x, y = 0 bis 2 ist, enthält, mit der Maßgabe, dass
(i) die Komponente (B1) in einer solchen Menge eingesetzt wird, dass der Bindemittelanteil des isocyanatgruppenhaltigen Grundkörpers der Komponente (B1) zwischen 5 und 45 Gew.% beträgt, jeweils bezogen auf die Summe aus dem Bindemittelanteil des isocyanatgruppenhaltigen Grundkörpers der Komponente (B1) plus dem Bindemittelanteil des isocyanatgruppenhaltigen Grundkörpers der Komponente (B2) und
(ii) die Mischung der Komponenten (B1) plus (B2) sowohl Struktureinheiten (I) als auch Struktureinheiten (II) aufweist.

2. Beschichtungsmittelzusammensetzung nach Anspruch 1, **dadurch gekennzeichnet, dass** der Gesamtgehalt an Struktureinheiten (I) in der Mischung aus Komponente (B1) plus Komponente (B2) zwischen 3 und 90 mol-%, bevorzugt zwischen 5 und 70 mol-%, jeweils bezogen auf die Gesamtheit der Struktureinheiten (I) plus (II), und der Gesamtgehalt an Struktureinheiten (II) in der Mischung aus Komponente (B1) plus Komponente (B2) zwischen 97 und 10 mol-%, bevorzugt zwischen 95 und 30 mol-%, jeweils bezogen auf die Gesamtheit der Struktureinheiten (I) plus (II), liegt.

3. Beschichtungsmittelzusammensetzung nach Anspruch 1 oder 2, **dadurch gekennzeichnet, dass** der Polyisocyanatgrundkörper der Verbindung (B1) Isophorondiisocyanat und/oder 4,4'-Methylendicyclohexyldiisocyanat und/oder deren Isocyanurat - Trimeres und/- oder deren Allophanat - Dimeres und/oder deren Biuret - Dimeres ist und/oder der Polyisocyanatgrundkörper der Verbindung (B2) 1,6-Hexamethylendiisocyanat und/oder deren Isocyanurat - Trimeres und/oder deren Allophanat - Dimeres und/oder deren Biuret - Dimeres ist.

4. Beschichtungsmittelzusammensetzung nach einem der Ansprüche 1 bis 3, **dadurch gekennzeichnet, dass**.
die Komponente (B2) dadurch hergestellt worden ist, dass acyclische aliphatische Polyisocyanate und/oder ein durch Trimerisierung, Dimerisierung, Urethan-, Biuret-, Uretdion- und/oder Allophanatbildung von einem solchen acyclischen aliphatischen Polyisocyanat abgeleitetes Polyisocyanat mit mindestens einer Verbindung der Formel (Ia)
H-NR-(X-SiR"x(OR')3-x) (Ia)
und/oder mit mindestens einer Verbindung der Formel (IIa)
HN(X-SiR"x(OR')3-x)n(X'-SiR"y(OR')3-y)m (IIa),
umgesetzt worden sind
und/oder dass
die Komponente (B1) dadurch hergestellt worden ist, dass cycloaliphatische Polyisocyanate und/oder durch Trimerisierung, Dimerisierung, Urethan-, Biuret-, Uretdion- oder Allophanatbildung von solchen cycloaliphatischen Polyisocyanaten abgeleitete Polyisocyanate mit mindestens einer Verbindung der Formel (Ia) und/oder mit mindestens einer Verbindung der Formel (IIa) umgesetzt worden sind, wobei die Substituenten jeweils die in Anspruch 1 genannte Bedeutung haben.

5. Beschichtungsmittelzusammensetzung nach einem der Ansprüche 1 bis 4, **dadurch gekennzeichnet, dass**
in der Komponente (B1) 0 bis 34 mol-%, bevorzugt weniger als 5,0 mol-%, besonders bevorzugt weniger als 2,5 mol-%, und ganz besonders bevorzugt keine der ursprünglich vorhandenen Isocyanatgruppen zu Struktureinheiten (I) und/oder (II) umgesetzt worden sind und/oder
in der Komponente (B2) zwischen 10 und 90 mol-%, bevorzugt zwischen 20 und 80 mol-% und besonders bevorzugt zwischen 30 und 70 mol-%, der ursprünglich vorhandenen Isocyanatgruppen zu Struktureinheiten (I) und/oder (II), bevorzugt zu Struktureinheiten (I) und (II), umgesetzt worden sind
und/oder
in der Mischung der Polyisocyanat-Komponente (B1) plus der Polyisocyanat-Komponente (B2) zwischen 10 und 80 mol-%, bevorzugt zwischen 20 und 70 mol-%, besonders bevorzugt zwischen 25 und weniger als 50 mol-% und ganz besonders bevorzugt zwischen 31 und 45 mol-%, der ursprünglich in (B1) plus (B2) vorhandenen Isocyanatgruppen zu Struktureinheiten (I) und/oder (II), bevorzugt zu Struktureinheiten (I) und (II), umgesetzt worden sind.

6. Beschichtungsmittelzusammensetzung nach einem der Ansprüche 1 bis 5, **dadurch gekennzeichnet, dass** und/oder dass in der Mischung aus Komponente (B1) plus Komponente (B2)
der Gesamtgehalt an Struktureinheiten (I) zwischen 10 und 50 mol-% und
der Gesamtgehalt an Struktureinheiten (II) in der Mischung aus Komponente (B1) plus Komponente (B2) zwischen 90 und 50 mol-%, jeweils bezogen auf die Gesamtheit der Struktureinheiten (I) plus (II), liegt
und
zwischen 25 und weniger als 50 mol-%, der ursprünglich in (B1) plus (B2) vorhandenen Isocyanatgruppen zu Struktureinheiten (I) und (II) umgesetzt worden sind
und
die Komponente (B1) in einer solchen Menge eingesetzt wird, dass der Bindemittelanteil des isocyanatgruppenhaltigen Grundkörpers der Komponente (B1) zwischen 15 und 35 Gew.% beträgt, jeweils bezogen auf die Summe aus dem Bindemittelanteil des isocyanatgruppenhaltigen Grundkörpers der Komponente (B1) plus dem Bindemittelanteil des isocyanatgruppenhaltigen Grundkörpers der Komponente (B2).

7. Beschichtungsmittelzusammensetzung nach einem der Ansprüche 1 bis 6, **dadurch gekennzeichnet, dass** die Beschichtungsmittelzusammensetzung als Rheologiehilfsmittel (R) eine Mischung aus mindestens einem Rheologiehilfsmittel (R1) auf der Basis hydrophiler Kieselsäuren und mindestens einem Rheologiehilfsmittel (R2) auf der Basis hydrophober Kieselsäuren enthält.

8. Beschichtungsmittelzusammensetzung nach einem der Ansprüche 1 bis 7, **dadurch gekennzeichnet, dass** das Rheologiehilfsmittel (R) in einer Gesamtmenge von 0,01 bis 10 Gew.-%, besonders bevorzugt in einer Gesamtmenge von 0,5 bis 5,0 Gew.-%, bezogen auf den Bindemittelanteil der Beschichtungsmittelzusammensetzung, eingesetzt wird.

9. Beschichtungsmittelzusammensetzung nach einem der Ansprüche 1 bis 8, **dadurch gekennzeichnet, dass** das Rheologiehilfsmittel (R) auf Basis pyrogener Kieselsäure eine Primärteilchengröße von <50 nm aufweist.

10. Beschichtungsmittelzusammensetzung nach einem der Ansprüche 1 bis 9, **dadurch gekennzeichnet, dass** das Beschichtungsmittel von 20 bis 79,98 Gew.-%, bevorzugt von 30 bis 69,4 Gew.-%, jeweils bezogen auf den Bindemittelanteil des Beschichtungsmittel, mindestens eines hydroxylgruppenhaltigen Polyacrylates (A) und/oder mindestens eines hydroxylgruppenhaltigen Polymethacrylates (A) enthält.

11. Beschichtungsmittelzusammensetzung nach einem der Ansprüche 1 bis 10, **dadurch gekennzeichnet, dass** die Beschichtungsmittelzusammensetzung mindestens einen phosphor- und stickstoffhaltigen Katalysator (D) enthält.

12. Mehrstufiges Beschichtungsverfahren, **dadurch gekennzeichnet, dass** auf ein gegebenenfalls vorbeschichtetes Substrat eine pigmentierte Basislackschicht und danach eine Schicht aus der Beschichtungsmittelzusammensetzung nach einem der Ansprüche 1 bis 11 aufgebracht wird.

13. Mehrstufiges Beschichtungsverfahren nach Anspruch 12, **dadurch gekennzeichnet, dass** nach Auftrag der pigmentierten Basislackschicht der aufgebrachte Basislack zunächst bei Temperaturen von Raumtemperatur bis 80°C getrocknet wird und nach dem Auftrag der Beschichtungsmittelzusammensetzung nach einem der Ansprüche 1 bis 11 bei Temperaturen von 20 bis 200°C während einer Zeit von einer Minute bis zu 10 Stunden gehärtet wird.

14. Verwendung der Beschichtungsmittelzusammensetzung nach einem der Ansprüche 1 bis 11 als Klarlack beziehungsweise Anwendung des Verfahrens nach Anspruch 12 oder 13 für die Automobilserienlackierung, die Lackierung von Automobil-Anbauteilen und/oder Nutzfahrzeugen und die Autoreparaturlackierung.

15. Effekt- und/oder farbgebende mehrschichtige Lackierung aus mindestens einer pigmentierten Basislackschicht und mindestens einer darauf angeordneten Klarlackschicht, **dadurch gekennzeichnet, dass** die Klarlackschicht aus einer Beschichtungsmittelzusammensetzung nach einem der Ansprüche 1 bis 11 hergestellt worden ist.

## Claims

1. Nonaqueous coating material composition comprising
(A) at least one polyhydroxyl-group-containing compound (A),
(B1) at least one polyisocyanate-group-containing compound (B1) having free or blocked isocyanate groups and having a cycloaliphatic polyisocyanate parent structure and/or a polyisocyanate parent structure that is derived from one such cycloaliphatic polyisocyanate by trimerization, dimerization, urethane formation, biuret formation, uretdione formation and/or allophanate formation,
(B2) at least one polyisocyanate-group-containing compound (B2), different from component (B1), having free or blocked isocyanate groups and having an acyclic, aliphatic polyisocyanate parent structure and/or a polyisocyanate parent structure that is derived from one such acyclic aliphatic polyisocyanate by trimerization, dimerization, urethane formation, biuret formation, uretdione formation and/or allophanate formation,
(D) at least one catalyst (D) for the crosslinking of silane groups,
and
(R) at least one rheological assistant (R) based on fumed silica,
where component (B1) and/or component (B2) comprise at least one structural unit of the formula (I)
-NR-(X-SiR''x(OR')3-x) (I),
and/or at least one structural unit of the formula (II)
-N(X-SiR''x(OR')3-x)n(X'-SiR''y(OR')3-y)m (II),
where
R = hydrogen, alkyl, cycloalkyl, aryl or aralkyl, it being possible for the carbon chain to be interrupted by nonadjacent oxygen, sulfur or NRa groups, where Ra = alkyl, cycloalkyl, aryl or aralkyl,
R' = hydrogen, alkyl or cycloalkyl it being possible for the carbon chain to be interrupted by nonadjacent oxygen, sulfur or NRa groups,
X, X' = linear and/or branched alkylene or cycloalkylene radical having 1 to 20 carbon atoms,
R'' = alkyl, cycloalkyl, aryl or aralkyl, it being possible for the carbon chain to be interrupted by nonadjacent oxygen, sulfur or NRa groups,
n = 0 to 2, m = 0 to 2, m+n = 2, and x, y = 0 to 2, with the provisos that
(i) component (B1) is used in an amount such that the binder fraction of the isocyanate-group-containing parent structure of component (B1) is between 5% and 45% by weight, based in each case on the sum of the binder fraction of the isocyanate-group-containing parent structure of component (B1) plus the binder fraction of the isocyanate-group-containing parent structure of component (B2), and
(ii) the mixture of components (B1) plus (B2) includes structural units (I) and structural units (II).

2. Coating material composition according to Claim 1, **characterized in that** the total amount of structural units (I) in the mixture of component (B1) plus component (B2) is between 3 and 90 mol%, preferably between 5 and 70 mol%, based in each case on the entirety of the structural units (I) plus (II), and the total amount of structural units (II) in the mixture of component (B1) plus component (B2) is between 97 and 10 mol%, preferably between 95 and 30 mol%, based in each case on the entirety of the structural units (I) plus (II).

3. Coating material composition according to Claim 1 or 2, **characterized in that** the polyisocyanate parent structure of the compound (B1) is isophorone diisocyanate and/or 4,4'-methylene-dicyclohexyl diisocyanate and/or the isocyanurate trimer and/or allophanate dimer and/or biuret dimer thereof, and/or the polyisocyanate parent structure of the compound (B2) is 1,6-hexamethylene diisocyanate and/or the isocyanurate trimer and/or allophanate dimer and/or biuret dimer thereof.

4. Coating material composition according to any of Claims 1 to 3, **characterized in that** the component (B2) has been prepared by reacting acyclic aliphatic polyisocyanates and/or a polyisocyanate derived from one such acyclic aliphatic polyisocyanate by trimerization, dimerization, urethane formation, biuret formation, uretdione formation and/or allophanate formation with at least one compound of the formula (Ia)
H-NR-(X-SiR''x(OR')3-x) (Ia)
and/or with at least one compound of the formula (IIa)
HN(X-SiR''x(OR')3-x)n(X'-SiR''y(OR')3-y)m (IIa),
and/or that component (B1) has been prepared by reacting cycloaliphatic polyisocyanates and/or polyisocyanates derived from cycloaliphatic polyisocyanates by trimerization, dimerization, urethane formation, biuret formation, uretdione formation or allophanate formation with at least one compound of formula (Ia) and/or with at least one compound of formula (IIa), the substituents having the definition stated in Claim 1.

5. Coating material composition according to any of Claims 1 to 4, **characterized in that** in component (B1) 0 to 34 mol%, preferably less than 5.0 mol%, more preferably less than 2.5 mol% and very preferably none of the isocyanate groups originally present have undergone reaction to form structural units (I) and/or (II), and/or
in component (B2) between 10 and 90 mol%, preferably between 20 and 80 mol% and more preferably between 30 and 70 mol% of the isocyanate groups originally present have undergone reaction to form structural units (I) and/or (II), preferably structural units (I) and (II), and/or
in the mixture of polyisocyanate component (B1) plus polyisocyanate component (B2) between 10 and 80 mol%, preferably between 20 and 70 mol%, more preferably between 25 and less than 50 mol% and very preferably between 31 and 45 mol% of the isocyanate groups originally present in (B1) plus (B2) have undergone reaction to form structural units (I) and/or (II), preferably structural units (I) and (II).

6. Coating material composition according to any of Claims 1 to 5, **characterized in that** and/or that in the mixture of component (B1) plus component (B2)
the total amount of structural units (I) is between 10 and 50 mol%
and
the total amount of structural units (II) in the mixture of component (B1) plus component (B2) is between 90 and 50 mole%, based in each case on the entirety of the structural units (I) plus (II),
and
between 25 and less than 50 mol% of the isocyanate groups originally present in (B1) plus (B2) have undergone reaction to form structural units (I) and (II)
and
component (B1) is used in an amount such that the binder fraction of the isocyanate-group-containing parent structure of component (B1) is between 15% and 35% by weight, based in each case on the sum of the binder fraction of the isocyanate-group-containing parent structure of component (B1) plus the binder fraction of the isocyanate-group-containing parent structure of component (B2).

7. Coating material composition according to any of Claims 1 to 6, **characterized in that** the coating material composition comprises as rheological assistant (R) a mixture of at least one rheological assistant (R1) based on hydrophilic silicas and at least one rheological assistant (R2) based on hydrophobic silicas.

8. Coating material composition according to any of Claims 1 to 7, **characterized in that** the rheological assistant (R) is used in a total amount of 0.01% to 10% by weight, more preferably in a total amount of 0.5% to 5.0% by weight, based on the binder fraction of the coating material composition.

9. Coating material composition according to any of Claims 1 to 8, **characterized in that** the rheological assistant (R) based on fumed silica has a primary particle size of < 50 nm.

10. Coating material composition according to any of Claims 1 to 9, **characterized in that** the coating material comprises from 20% to 79.98% by weight, preferably from 30% to 69.4% by weight, based in each case on the binder fraction of the coating material, of at least one hydroxyl-containing polyacrylate (A) and/or at least one hydroxyl-containing polymethacrylate (A).

11. Coating material composition according to any of Claims 1 to 10, **characterized in that** the coating material composition comprises at least one phosphorus- and nitrogen-containing catalyst (D).

12. Multistage coating process **characterized in that** atop an optionally precoated substrate a pigmented basecoat film and thereafter a film of the coating material composition according to any of Claims 1 to 11 is applied.

13. Multistage coating process according to Claim 12, **characterized in that**, after application of the pigmented basecoat film, the applied basecoat is initially dried at temperatures from room temperature to 80°C, and after the application of the coating material composition according to any of Claims 1 to 11, curing takes place at temperatures from 20 to 200°C for a time of one minute up to 10 hours.

14. Use of the coating material composition according to any of Claims 1 to 11 as clearcoat and application of the process according to Claim 12 or 13 for automotive OEM finishing, the finishing of parts for installation in or on motor vehicles and/or of utility vehicles, and automotive refinishing.

15. Multicoat effect and/or color paint system comprising at least one pigmented basecoat and at least one clearcoat disposed thereon, **characterized in that** the clearcoat has been produced from a coating material composition according to any of Claims 1 to 11.

## Revendications

1. Composition non aqueuse d'agent de revêtement, contenant
(A) au moins un composé (A) contenant des groupes polyhydroxyle,
(B1) au moins un composé (B1) contenant des groupes polyisocyanate présentant des groupes isocyanate libres ou bloqués et présentant un corps de base polyisocyanate cycloaliphatique et/ou un corps de base polyisocyanate dérivé d'un tel polyisocyanate cycloaliphatique par trimérisation, dimérisation, formation d'uréthane, de biuret, d'uretdione et/ou d'allophanate,
(B2) au moins un composé (B2) contenant des groupes polyisocyanate, différent du composant (B1), présentant des groupes isocyanate libres ou bloqués et présentant un corps de base polyisocyanate acyclique, aliphatique et/ou un corps de base polyisocyanate dérivé d'un tel polyisocyanate acyclique, aliphatique par trimérisation, dimérisation, formation d'uréthane, de biuret, d'uretdione et/ou d'allophanate,
(D) au moins un catalyseur (D) pour la réticulation de groupes silane et
(R) au moins un adjuvant de rhéologie (R) à base de silice pyrogène,
le composant (B1) et/ou le composant (B2) contenant au moins une unité structurale de formule (I)
-NR-(X-SiR"ₓ(OR')₃₋ₓ) (I),
et/ou au moins une unité structurale de formule (II)
-N(X-SiR"ₓ(OR')₃₋ₓ)ₙ(X'-SiR"_{y}(OR')_{3-y})ₘ (II),
dans lesquelles
R = hydrogène, alkyle, cycloalkyle, aryle ou aralkyle, où la chaîne carbonée peut être interrompue par des groupes oxygène, soufre ou NRa non adjacents, avec Ra = alkyle, cycloalkyle, aryle ou aralkyle,
R' = hydrogène, alkyle ou cycloalkyle, où la chaîne carbonée peut être interrompue par des groupes oxygène, soufre ou NRa non adjacents,
X,X' = un radical alkylène linéaire et/ou ramifié ou cycloalkylène, comprenant 1 à 20 atomes de carbone,
R" = alkyle, cycloalkyle, aryle ou aralkyle, où la chaîne carbonée peut être interrompue par des groupes oxygène, soufre ou NRa non adjacents,
n = 0 à 2, m = 0 à 2, m + n = 2 et x, y = 0 à 2, à condition que
(i) le composant (B1) soit utilisé en une quantité telle que la proportion de liant du corps de base contenant des groupes isocyanate du composant (B1) est située entre 5 et 45% en poids, à chaque fois par rapport à la somme de la proportion de liant du corps de base contenant des groupes isocyanate du composant (B1) plus la proportion de liant du corps de base contenant des groupes isocyanate du composant (B2) et
(ii) le mélange des composants (B1) plus (B2) présente tant des unités structurales (I) que des unités structurales (II).

2. Composition d'agent de revêtement selon la revendication 1, **caractérisée en ce que** la teneur totale en unités structurales (I) dans le mélange du composant (B1) plus le composant (B2) est située entre 3 et 90% en mole, de préférence entre 5 et 70% en mole, à chaque fois par rapport à la totalité des unités structurales (I) plus (II), et la teneur totale en unités structurales (II) dans le mélange du composant (B1) plus le composant (B2) est située entre 97 et 10% en mole, de préférence entre 95 et 30% en mole, à chaque fois par rapport à la totalité des unités structurales (I) plus (II).

3. Composition d'agent de revêtement selon la revendication 1 ou 2, **caractérisée en ce que** le corps de base polyisocyanate du composé (B1) est le diisocyanate d'isophorone et/ou le diisocyanate de 4,4'-méthylènedicyclohexyle et/ou son trimère d'isocyanurate et/ou son dimère d'allophanate et/ou son dimère de biuret et/ou le corps de base polyisocyanate du composé (B2) est le diisocyanate de 1,6-hexaméthylène et/ou son trimère d'isocyanurate et/ou son dimère d'allophanate et/ou son dimère de biuret.

4. Composition d'agent de revêtement selon l'une quelconque des revendications 1 à 3, **caractérisée en ce que** le composant (B2) a été préparé **en ce que** des polyisocyanates acycliques, aliphatiques et/ou un polyisocyanate dérivé d'un tel polyisocyanate acyclique, aliphatique par trimérisation, dimérisation, formation d'uréthane, de biuret, d'uretdione et/ou d'allophanate a/ont été transformé (s) avec au moins un composé de formule (Ia)
H-NR-(X-SiR"ₓ(OR')₃₋ₓ) (Ia)
et/ou avec au moins un composé de formule (IIa)
HN (X-SiR"ₓ(OR')₃₋ₓ)ₙ(X'-SiR"_{y}(OR')_{3-y})ₘ (IIa),
et/ou **en ce que** le composant (B1) a été préparé **en ce que** des polyisocyanates cycloaliphatiques et/ou des polyisocyanates dérivés de tels polyisocyanates cycloaliphatiques par trimérisation, dimérisation, formation d'uréthane, de biuret, d'uretdione ou d'allophanate ont été transformés avec au moins un composé de formule (Ia) et/ou avec au moins un composé de formule (IIa), les substituants ayant la signification à chaque fois mentionnée dans la revendication 1.

5. Composition d'agent de revêtement selon l'une quelconque des revendications 1 à 4, **caractérisée en ce que**, dans le composant (B1), 0 à 34% en mole, de préférence moins de 5,0% en mole, de manière particulièrement préférée moins de 2,5% en mole et de manière tout particulièrement préférée aucun des groupes isocyanate initialement présents ont été transformés en unités structurales (I) et/ou (II) et/ou, dans le composant (B2), entre 10 et 90% en mole, de préférence entre 20 et 80% en mole et de manière particulièrement préférée entre 30 et 70% en mole, des groupes isocyanate initialement présents ont été transformés en unités structurales (I) et/ou (II), de préférence en unités structurales (I) et (II) et/ou, dans le mélange du composant polyisocyanate (B1) plus le composant polyisocyanate (B2), entre 10 et 80% en mole, de préférence entre 20 et 70% en mole, de manière particulièrement préférée entre 25 et moins de 50% en mole et de manière tout particulièrement préférée entre 31 et 45% en mole, des groupes isocyanate initialement présents dans (B1) plus (B2) ont été transformés en unités structurales (I) et/ou (II), de préférence en unités structurales (I) et (II).

6. Composition d'agent de revêtement selon l'une quelconque des revendications 1 à 5, **caractérisée en ce que** dans le mélange du composant (B1) plus le composant (B2), la teneur totale en unités structurales (I) est située entre 10 et 50% en mole et la teneur totale en unités structurales (II) dans le mélange du composant (B1) plus le composant (B2) est située entre 90 et 50% en mole, à chaque fois par rapport à la totalité des unités structurales (I) plus (II) et entre 25 et moins de 50% en mole des groupes isocyanate initialement présents dans (B1) plus (B2) ont été transformés en unités structurales (I) et (II) et le composant (B1) est utilisé en une quantité telle que la proportion de liant du corps de base contenant des groupes isocyanate du composant (B1) se situe entre 15 et 35% en poids, à chaque fois par rapport à la somme de la proportion de liant du corps de base contenant des groupes isocyanate du composant (B1) plus la proportion de liant du corps de base contenant des groupes isocyanate du composant (B2).

7. Composition d'agent de revêtement selon l'une quelconque des revendications 1 à 6, **caractérisée en ce que** la composition d'agent de revêtement contient, comme adjuvant de rhéologie (R), un mélange d'au moins un adjuvant de rhéologie (R1) à base de silices hydrophiles et d'au moins un adjuvant de rhéologie (R2) à base de silices hydrophobes.

8. Composition d'agent de revêtement selon l'une quelconque des revendications 1 à 7, **caractérisée en ce que** l'adjuvant de rhéologie (R) est utilisé en une quantité totale de 0,01 à 10% en poids, de manière particulièrement préférée en une quantité totale de 0,5 à 5,0% en poids, par rapport à la proportion de liant de la composition d'agent de revêtement.

9. Composition d'agent de revêtement selon l'une quelconque des revendications 1 à 8, **caractérisée en ce que** l'adjuvant de rhéologie (R) à base de silice pyrogène présente une grosseur de particule primaire < 50 nm.

10. Composition d'agent de revêtement selon l'une quelconque des revendications 1 à 9, **caractérisée en ce que** l'agent de revêtement contient 20 à 79,98% en poids, de préférence de 30 à 69,4% en poids, à chaque fois par rapport à la proportion de liant de l'agent de revêtement, d'au moins un polyacrylate (A) contenant des groupes hydroxyle et/ou d'au moins un polyméthacrylate (A) contenant des groupes hydroxyle.

11. Composition d'agent de revêtement selon l'une quelconque des revendications 1 à 10, **caractérisée en ce que** la composition d'agent de revêtement contient au moins un catalyseur contenant du phosphore et de l'azote (D).

12. Procédé de revêtement à plusieurs étapes, **caractérisé en ce qu'**on applique, sur un substrat le cas échéant revêtu au préalable, une couche de laque de base pigmentée, puis une couche de la composition d'agent de revêtement selon l'une quelconque des revendications 1 à 11.

13. Procédé de revêtement en plusieurs étapes selon la revendication 12, **caractérisé en ce qu'**après l'application de la couche de laque de base pigmentée, on sèche d'abord la laque de base appliquée à des températures allant de la température ambiante à 80°C et après l'application de la composition d'agent de revêtement selon l'une quelconque des revendications 1 à 11, on durcit à des températures de 20 à 200°C pendant un laps de temps d'une minute à 10 heures.

14. Utilisation de la composition d'agent de revêtement selon l'une quelconque des revendications 1 à 11 comme laque claire ou utilisation du procédé selon la revendication 12 ou 13 pour le laquage en série de voitures, le laquage de pièces pour voitures et/ou de véhicules utilitaires et le laquage de réparation de voitures.

15. Laquage multicouche conférant un effet et/ou une couleur constitué par au moins une couche de laque de base pigmentée et au moins une couche de laque claire disposée sur celle-ci, **caractérisé en ce que** la couche de laque claire a été préparée à partir d'une composition d'agent de revêtement selon l'une quelconque des revendications 1 à 11.
